(19) Europäisches Patentamt / European Patent Office / Office européen des brevets

(11) **EP 4 606 771 A1**

(12) **EUROPEAN PATENT APPLICATION**
published in accordance with Art. 153(4) EPC

(43) Date of publication:
**27.08.2025 Bulletin 2025/35**

(21) Application number: **24763781.2**

(22) Date of filing: **22.02.2024**

(51) International Patent Classification (IPC):
**C01G 25/02** (2006.01)

(52) Cooperative Patent Classification (CPC):
**C01G 25/00; C01G 25/02; C01G 27/00**

(86) International application number:
**PCT/JP2024/006523**

(87) International publication number:
**WO 2024/181300 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2023 JP 2023031211**

(71) Applicant: **Daiichi Kigenso Kagaku Kogyo Co., Ltd.**
**Osaka-shi, Osaka 541-0041 (JP)**

(72) Inventors:
• **HIROSE,Yoshikazu**
  **Osaka-shi, Osaka 559-0025 (JP)**
• **AKASHI,Ryo**
  **Osaka-shi, Osaka 559-0025 (JP)**

(74) Representative: **Cabinet Beau de Loménie**
**103, rue de Grenelle / CS 90800**
**75340 Paris Cedex 07 (FR)**

(54) **ZIRCONIA-CONTAINING ALUMINA-BASED COMPOSITE OXIDE AND METHOD FOR PRODUCING ZIRCONIA-CONTAINING ALUMINA-BASED COMPOSITE OXIDE**

(57)     The present invention provides a zirconia-containing alumina-based composite oxide which contains zirconia and alumina, wherein with respect to the XRD profile A after 12-hour heating at 1200°C at the atmospheric pressure, if X is the intensity of the peak associated with $\theta$-$Al_2O_3$ phase around $2\theta = 33°$, Y is the intensity of the peak associated with $\alpha$-$Al_2O_3$ phase around $2\theta = 26°$, and R is X/Y, R satisfies formula (1).

$$Formula\ (1):\ 0.25 < R < 5.0$$

Fig.1

EP 4 606 771 A1

**Description**

TECHNICAL FIELD

The present invention relates to a zirconia-containing alumina-based composite oxide and a method for producing a zirconia-containing alumina-based composite oxide.

BACKGROUND ART

As has been incorporated into recent exhaust gas regulation modes, exhaust gas temperatures rise significantly during driving at high speeds and ultra-high speeds. Hence, the used temperatures of catalysts for exhaust gas purification also have risen significantly compared to conventional temperatures, and it is difficult to suppress sintering of a noble metal such as Rh.

Conventionally, a composite oxide containing zirconia and alumina is known as a catalyst carrier application (see, for example, Patent Documents 1 to 5).

PRIOR ART DOCUMENTS

PATENT DOCUMENTS

Patent Document 1: JP-A-2013-184125
Patent Document 2: JP-A-2014-552
Patent Document 3: JP-A-2016-209858
Patent Document 4: JP-A-2017-132663
Patent Document 5: JP-A-2020-514217

SUMMARY OF THE INVENTION

PROBLEMS TO BE SOLVED BY THE INVENTION

Conventional composite oxides containing zirconia and alumina generally have a reduced specific surface area when exposed to a high temperature. When the specific surface area decreases, the catalytic function is deteriorated, and thus a zirconia-containing alumina-based composite oxide having a high specific surface area corresponding to the content of alumina even when exposed to a high temperature is required.

The present invention has been devised in view of the above-described problems, and an object of the present invention is to provide a zirconia-containing alumina-based composite oxide that has a high specific surface area corresponding to the content of alumina even when exposed to a high temperature. Another object of the present invention is to provide a method for producing a zirconia-containing alumina-based composite oxide, by which the zirconia-containing alumina-based composite oxide can be obtained.

MEANS FOR SOLVING THE PROBLEMS

In the conventional composite oxide containing $Al_2O_3$, when exposed to a high temperature, $\alpha$-$Al_2O_3$ is significantly crystallized, and accordingly, the specific surface area decreases. The present inventors have found that when the crystallization of $\alpha$-$Al_2O_3$ is inhibited, a high specific surface area corresponding to the content of alumina is obtained even when exposed to a high temperature, thereby accomplishing the present invention.

In other words, the present invention provides the following.

(1) A zirconia-containing alumina-based composite oxide containing zirconia and alumina,
in which in an XRD profile A after 12-hour heating under atmospheric pressure at 1200°C, when a peak intensity derived from a $\theta$-$Al_2O_3$ phase around $2\theta = 33°$ is X, a peak intensity derived from an $\alpha$-$Al_2O_3$ phase around $2\theta = 26°$ is Y, and [X/Y] is R, R satisfies the following Formula [1]:

$$\text{Formula [1]: } 0.25 < R < 5.0.$$

According to the above configuration, the R is larger than 0.25. That is, the content ratio of $\theta$-$Al_2O_3$ to $\alpha$-$Al_2O_3$ after 12-

hour heating at 1200°C is large. In the present invention, of the alumina contained in the zirconia-containing alumina-based composite oxide, the content of $\alpha$-$Al_2O_3$, which is significantly crystallized when exposed to a high temperature, is reduced, and the content of $\theta$-$Al_2O_3$, which is less likely to be crystallized at a high temperature as compared with $\alpha$-$Al_2O_3$, is increased. Thus, the zirconia-containing alumina-based composite oxide has a high specific surface area corresponding to the content of alumina even when exposed to a high temperature.

(2) The zirconia-containing alumina-based composite oxide according to (1), in which when a peak intensity derived from $ZrO_2$ around $2\theta = 30°$ in the XRD profile A is Z, a mass ratio of an oxide component of $ZrO_2$ to the entire zirconia-containing alumina-based composite oxide is W, and [Z/W] is Tr, Tr satisfies the following Formula [2]:

$$\text{Formula [2]: } 1.70 < Tr < 25.0.$$

As described above, Tr is a value obtained by dividing the peak intensity (Z) associated with $ZrO_2$ by the mass ratio (W) of the oxide component of $ZrO_2$, and this value indicates the degree of crystal growth of $ZrO_2$.

The present inventors have found that $ZrO_2$ acts as a barrier for diffusion of $Al_2O_3$ when Tr is a certain value or more. That is, it has been found that Tr indicating the degree of crystal growth of $ZrO_2$ can be a value indicating contribution of $ZrO_2$ as a barrier for diffusion of $Al_2O_3$.

In the present invention, since the required crystallite size of $ZrO_2$ varies depending on the content of $ZrO_2$ in the oxide, Tr is defined as a value obtained by division by the mass ratio of $ZrO_2$.

When Tr is larger than 1.70, the degree of crystal growth of $ZrO_2$ is large to some extent, and $ZrO_2$ suitably acts as a barrier for diffusion of $Al_2O_3$ when exposed to a high temperature, and aggregation (crystallization) of $Al_2O_3$ is suppressed. As a result, even when exposed to a high temperature, a higher specific surface area corresponding to the content of alumina can be obtained.

(3) The zirconia-containing alumina-based composite oxide according to (1) or (2), in which the R satisfies the following Formula [3]:

$$\text{Formula [3]: } 0.35 < R < 3.5.$$

When the R is larger than 0.35, a decrease in the specific surface area due to exposure to a high temperature can be further suppressed.

(4) The zirconia-containing alumina-based composite oxide according to any one of (1) to (3), in which the Tr satisfies the following Formula [4]:

$$\text{Formula [4]: } 1.72 < Tr < 20.0.$$

When the Tr is larger than 1.72, a decrease in the specific surface area due to exposure to a high temperature can be further suppressed.

(5) The zirconia-containing alumina-based composite oxide according to any one of (1) to (4), in which a content of alumina is 15% by mass or more and 97% by mass or less.

When the content of alumina is 15% by mass or more, a decrease in the specific surface area due to exposure to a high temperature can be further suppressed. When the content of alumina is 97% by mass or less, segregation of elements is reduced, so that crystallization of alumina due to exposure to a high temperature can be suppressed.

(6) The zirconia-containing alumina-based composite oxide according to any one of (1) to (5), in which a content of zirconia is 0.1% by mass or more and 75% by mass or less.

When the content of zirconia is 0.1% by mass or more, a decrease in the specific surface area due to exposure to a high temperature can be further suppressed because of the stabilization effect by diffusion of elements into alumina. When the content of zirconia is 75% by mass or less, segregation of elements is reduced, so that crystallization of zirconia due to exposure to a high temperature can be suppressed.

(7) The zirconia-containing alumina-based composite oxide according to any one of (1) to (6), containing an oxide of a rare earth element other than Pm.

When an oxide of a rare earth element other than Pm is contained, a decrease in the specific surface area due to exposure to a high temperature can be further suppressed.

Furthermore, a method for producing a zirconia-containing alumina-based composite oxide according to the present invention is a method for producing a zirconia-containing alumina-based composite oxide, containing:

step 1 of obtaining solution A in which a basic zirconium salt is added to an aqueous solution of a soluble carbonate and/or a soluble hydrogen carbonate;
step 2 of obtaining solution B containing a raw material salt containing aluminum and a raw material salt containing zirconium;

step 3 of obtaining a precipitate of a zirconium-containing aluminum-based composite hydroxide by mixing the solution A and the solution B; and

step 4 of obtaining a zirconia-containing alumina-based composite oxide by heat-treating the precipitate, in which

an amount of the basic zirconium salt to be added in the step 1 is an amount such that an amount of zirconia accounting for in a zirconia-containing alumina-based composite oxide to be obtained is 1 to 95% by mass,

an amount of the raw material salt containing zirconium to be added in the step 2 is an amount such that an amount of zirconia accounting for in the zirconia-containing alumina-based composite oxide to be obtained is 5 to 99% by mass, and

a total of zirconia contained in the basic zirconium salt to be added in the step 1 and zirconia contained in the raw material salt containing zirconium to be added in the step 2 is an amount such that the total is 100% by mass of zirconia accounting for in the zirconia-containing alumina-based composite oxide to be obtained.

In general, when alumina is exposed to a high temperature, a crystal phase transitions as boehmite $\rightarrow \gamma$-$Al_2O_3 \rightarrow \delta$-$Al_2O_3 \rightarrow \theta$-$Al_2O_3 \rightarrow \alpha$-$Al_2O_3$, and the $\alpha$-phase is most stable.

In the production of an alumina composite oxide, generally, a metal salt containing an aluminum salt is precipitated as a precursor containing boehmite by an alkali neutralization method or the like. However, in this method, the $\gamma$ phase is formed during firing, and the crystal phase finally transitions to the $\alpha$ phase. In addition, when metal salts of a plurality of elements are used in obtaining an alumina composite oxide by an alkali neutralization method or the like, segregation occurs in the element distribution in the resulting precipitate due to a difference in pH at which hydroxide crystals are generated, and it is difficult to obtain a final composite oxide having a uniform element distribution. In a case where the element distribution is not uniform and there is some bias, when heated at a high temperature, crystallization of a specific element is promoted with a segregated portion of the element distribution as a starting point.

Meanwhile, in the present invention, fine $ZrO_2$ can be highly dispersed in the precursor by precipitating an aluminum salt using the solution A (basic zirconium solution) as a neutralizing agent raw material. Crystallization of a specific element at the time of high temperature heating is suppressed, so that the $\theta$ phase is maintained even after the high temperature heating.

The R can be controlled to be a proper value by adjusting the amount of the basic zirconium salt to be added in the step 1 to an amount such that the amount of zirconia accounting for in the zirconia-containing alumina-based composite oxide to be obtained is 1 to 95% by mass, and adding the remaining zirconia in the step 2.

From the above, in the zirconia-containing alumina-based composite oxide to be obtained by the present production method, the crystallization of the $\alpha$ phase under a high temperature heating condition is suppressed, and a decrease in a specific surface area is suppressed.

EFFECT OF THE INVENTION

According to the present invention, it is possible to provide a zirconia-containing alumina-based composite oxide having a high specific surface area corresponding to the content of alumina even when exposed to a high temperature. In addition, it is possible to provide a method for producing a zirconia-containing alumina-based composite oxide, by which the zirconia-containing alumina-based composite oxide can be obtained.

BRIEF DESCRIPTION OF THE DRAWING

Fig. 1 is an X-ray diffraction spectrum of the zirconia-containing alumina-based composite oxide after heating in Example 1.

Fig. 2 is an X-ray diffraction spectrum of the zirconia-containing alumina-based composite oxide after heating in Example 2.

Fig. 3 is an X-ray diffraction spectrum of the zirconia-containing alumina-based composite oxide after heating in Comparative Example 1.

Fig. 4 is an X-ray diffraction spectrum of the zirconia-containing alumina-based composite oxide after heating in Example 3.

Fig. 5 is an X-ray diffraction spectrum of the zirconia-containing alumina-based composite oxide after heating in Comparative Example 2.

Fig. 6 is an X-ray diffraction spectrum of the zirconia-containing alumina-based composite oxide after heating in Example 4.

Fig. 7 is an X-ray diffraction spectrum of the zirconia-containing alumina-based composite oxide after heating in Comparative Example 3.
Fig. 8 is an X-ray diffraction spectrum of the zirconia-containing alumina-based composite oxide after heating in Example 7.
Fig. 9 is an X-ray diffraction spectrum of the zirconia-containing alumina-based composite oxide after heating in Comparative Example 4.
Fig. 10 is an X-ray diffraction spectrum of the zirconia-containing alumina-based composite oxide after heating in Example 13.
Fig. 11 is an X-ray diffraction spectrum of the zirconia-containing alumina-based composite oxide after heating in Comparative Example 5.
Fig. 12 is an X-ray diffraction spectrum of the zirconia-containing alumina-based composite oxide after heating in Example 22.
Fig. 13 is an X-ray diffraction spectrum of the zirconia-containing alumina-based composite oxide after heating in Comparative Example 6.
Fig. 14 is an X-ray diffraction spectrum of the zirconia-containing alumina-based composite oxide after heating in Example 31.
Fig. 15 is an X-ray diffraction spectrum of the zirconia-containing alumina-based composite oxide after heating in Example 32.
Fig. 16 is an X-ray diffraction spectrum of the zirconia-containing alumina-based composite oxide after heating in Example 33.
Fig. 17 is an X-ray diffraction spectrum of the zirconia-containing alumina-based composite oxide after heating in Comparative Example 7.
Fig. 18 is an X-ray diffraction spectrum of the zirconia-containing alumina-based composite oxide after heating in Comparative Example 8.

MODE FOR CARRYING OUT THE INVENTION

Hereinafter, embodiments of the present invention will be described. However, the present invention is not limited only to these embodiments. The zirconia-containing alumina-based composite oxide referred to herein is a common porous zirconia-based composite oxide and contains 10% by mass or less of impurity metal compounds including hafnium. The terms "comprise" and "contain" herein include the concepts of "comprise", "contain", "substantially consist of", and "consist of".

The maximum value and minimum value of content of each component shown below should each independently be considered as a preferable minimum value and a preferable maximum value of the present invention regardless of the contents of other components.

Further, the maximum values and the minimum values of various parameters (measured values and the like) shown below should each independently be considered as preferable minimum values and maximum values of the present invention regardless of the content (composition) of each component.

[Zirconia-containing alumina-based composite oxide]

The zirconia-containing alumina-based composite oxide according to the present embodiment is a zirconia-containing alumina-based composite oxide containing zirconia and alumina,
in which in an XRD profile A after 12-hour heating under the atmospheric pressure at 1200°C, when a peak intensity associated with a $\theta$-$Al_2O_3$ phase around $2\theta = 33°$ is X, a peak intensity associated with an $\alpha$-$Al_2O_3$ phase around $2\theta = 26°$ is Y, and [X/Y] is R, R satisfies the following Formula [1]:

$$\text{Formula [1]: } 0.25 < R < 5.0.$$

In the zirconia-containing alumina-based composite oxide, the R is larger than 0.25. That is, the content ratio of $\theta$-$Al_2O_3$ to $\alpha$-$Al_2O_3$ after 12-hour heating at 1200°C is large. In the present embodiment, of the alumina contained in the zirconia-containing alumina-based composite oxide, the content of $\alpha$-$Al_2O_3$, which is significantly crystallized when exposed to a high temperature, is reduced, and the content of $\theta$-$Al_2O_3$, which is less likely to be crystallized at a high temperature as compared with $\alpha$-$Al_2O_3$, is increased. Thus, the zirconia-containing alumina-based composite oxide has a high specific surface area corresponding to the content of alumina even when exposed to a high temperature.

The R can be controlled by, for example, a production method. Specifically, the R can be controlled by the following production method to be described later.

A method for producing a zirconia-containing alumina-based composite oxide, including:

step 1 of obtaining solution A in which a basic zirconium salt is added to an aqueous solution of a soluble carbonate and/or a soluble hydrogen carbonate;

step 2 of obtaining solution B containing a raw material salt containing aluminum and a raw material salt containing zirconium;

step 3 of obtaining a precipitate of a zirconium-containing aluminum-based composite hydroxide by mixing the solution A and the solution B; and

step 4 of obtaining a zirconia-containing alumina-based composite oxide by heat-treating the precipitate, in which

an amount of the basic zirconium salt to be added in the step 1 is an amount such that an amount of zirconia accounting for in a zirconia-containing alumina-based composite oxide to be obtained is 1 to 95% by mass,

an amount of the raw material salt containing zirconium to be added in the step 2 is an amount such that an amount of zirconia accounting for in the zirconia-containing alumina-based composite oxide to be obtained is 5 to 99% by mass, and

a total of zirconia contained in the basic zirconium salt to be added in the step 1 and zirconia contained in the raw material salt containing zirconium to be added in the step 2 is an amount such that the total is 100% by mass of zirconia accounting for in the zirconia-containing alumina-based composite oxide to be obtained.

Fine $ZrO_2$ can be highly dispersed in the precursor by precipitating an aluminum salt using the solution A (basic zirconium solution) as a neutralizing agent raw material. Crystallization of a specific element at the time of high temperature heating is suppressed, so that the θ phase is maintained even after the high temperature heating. This makes it possible to make the R larger than 0.25.

A method for controlling R in more detail may be controlling the ratio of the basic zirconium solution to be used as a raw material within the above numerical range. Specifically, the value of R tends to increase as the amount of the basic zirconium salt to be added in the step 1 is increased.

This is apparent also from, for example, comparison between Example 1 and Example 2 and comparison between Example 5 and Example 6.

It is noted that when the amount of the basic zirconium salt to be added in the step 1 increases, the amount of the raw material salt containing zirconium to be added in the step 2 decreases. When the amount of the raw material salt containing zirconium to be added in the step 2 decreases, $ZrO_2$ that functions as a barrier for diffusion of $Al_2O_3$ decreases. This is because $ZrO_2$ derived from the basic zirconium salt to be added in the step 1 is fine and thus hardly functions as a barrier for diffusion of $Al_2O_3$.

Therefore, as the amount of the basic zirconium salt to be added in the step 1 is increased, the value of R tends to increase, but when the amount of the basic zirconium salt to be added in the step 1 exceeds a certain amount, the value of R reaches a local maximum and then decreases.

This is apparent also from, for example, comparison among Examples 31 to 33, Comparative Example 7, and Comparative Example 8.

In Examples 31 to 33, Comparative Example 7, and Comparative Example 8, since the amount of the basic zirconium salt to be added in the step 1 is increased in the order of Comparative Example 7 and Example 32, it can be seen that R is increased (0.20 in Comparative Example 7 and 0.40 in Example 31). When the amount of the basic zirconium salt to be added in the step 1 is further increased, the local maximum value is reached in the vicinity of between Example 31 and Example 32. When the amount of the basic zirconium salt to be added in the step 1 is further increased, it can be seen that R decreases in the order of Example 32, Example 33, and Comparative Example 8 (0.29 in Example 32, 0.25 in Example 33, and 0.23 in Comparative Example 8).

As described above, R can be controlled, for example, by controlling the ratio of the basic zirconium solution to be used as a raw material within the above numerical range.

The R is preferably 0.3 or more, more preferably 0.35 or more, and still more preferably 0.4 or more. The R is preferably 4.0 or less, more preferably 3.0 or less, and still more preferably 2.5 or less.

The R is preferably more than 0.25 and 2.41 or less, more preferably 0.26 or more and 2.4 or less, still more preferably 0.26 or more and 2.3 or less, particularly preferably 0.28 or more and 2.29 or less, and especially preferably 0.29 or more and 2.2 or less, or 0.30 or more and 1.8 or less.

In the zirconia-containing alumina-based composite oxide, when the peak intensity associated with $ZrO_2$ around $2\theta = 30°$ in the XRD profile A is Z, the mass ratio of the oxide component of $ZrO_2$ to the entire zirconia-containing alumina-based composite oxide is W (% by mass), and [Z/W] is Tr, Tr preferably satisfies the following Formula [2].

$$\text{Formula [2]: } 1.70 < Tr < 25.0$$

As described above, Tr is a value obtained by dividing the peak intensity (Z) associated with $ZrO_2$ by the mass ratio (W) of the oxide component of $ZrO_2$, and this value indicates the degree of crystal growth of $ZrO_2$.

The present inventors have found that $ZrO_2$ acts as a barrier for diffusion of $Al_2O_3$ when Tr is a certain value or more. That is, it has been found that Tr indicating the degree of crystal growth of $ZrO_2$ can be a value indicating contribution of $ZrO_2$ as a barrier for diffusion of $Al_2O_3$.

In the present embodiment, since the required crystallite size of $ZrO_2$ varies depending on the content of $ZrO_2$ in the oxide, Tr is defined as a value obtained by division by the mass ratio of $ZrO_2$.

When Tr is larger than 1.70, the degree of crystal growth of $ZrO_2$ is large to some extent, and $ZrO_2$ suitably acts as a barrier for diffusion of $Al_2O_3$ when exposed to a high temperature, and aggregation (crystallization) of $Al_2O_3$ is suppressed. As a result, even when exposed to a high temperature, a higher specific surface area corresponding to the content of alumina can be obtained.

The Tr is preferably larger than 1.72, more preferably larger than 1.75, still more preferably larger than 1.80, particularly preferably larger than 1.85, and especially preferably larger than 1.90. The Tr is preferably as large as possible, but is, for example, 22.0 or less, 20.0 or less, or the like.

The Tr is preferably 1.75 or more and 18.1 or less, more preferably 1.78 or more and 18.04 or less, still more preferably 1.80 or more and 18.0 or less, particularly preferably 1.85 or more and 17.9 or less, and especially preferably 1.87 or more and 17.39 or less, or 1.92 or more and 16.34 or less.

The Tr can be controlled by, for example, a production method. Specifically, $ZrO_2$ derived from the basic zirconium salt to be added in the step 1 is fine, and thus hardly appears as a peak intensity associated with $ZrO_2$ around $2\theta = 30°$. Meanwhile, $ZrO_2$ derived from the raw material salt containing zirconium to be added in the step 2 is not fine, and thus is likely to appear as a peak intensity associated with $ZrO_2$ around $2\theta = 30°$. Therefore, when the ratio of the basic zirconium salt to be added in the step 1 is increased (when the ratio of the raw material salt containing zirconium to be added in the step 2 is decreased), Tr tends to decrease, whereas when the ratio of the basic zirconium salt to be added in the step 1 is decreased (when the ratio of the raw material salt containing zirconium to be added in the step 2 is increased), Tr tends to increase.

The specific surface area of the zirconia-containing alumina-based composite oxide after 12-hour heating under the atmospheric pressure at 1200°C varies depending on the content of alumina, but is preferably 0.1 $m^2$/g or more and 50 $m^2$/g or less. The specific surface area after the heating is more preferably 0.2 $m^2$/g or more, and still more preferably 0.3 $m^2$/g or more. The specific surface area after the heating is more preferably 45 $m^2$/g or less, and still more preferably 40 $m^2$/g or less.

The specific surface area of the zirconia-containing alumina-based composite oxide before the heating is preferably 10 $m^2$/g or more and 300 $m^2$/g or less. The specific surface area before the heating is more preferably 12 $m^2$/g or more, still more preferably 15 $m^2$/g or more, particularly preferably 20 $m^2$/g or more, especially preferably 25 $m^2$/g or more, and particularly especially preferably 30 $m^2$/g or more. The specific surface area before the heating does not have any particularly preferable upper limit, but the specific surface area before the heating may be 280 $m^2$/g or less, 270 $m^2$/g or less, 260 $m^2$/g or less, 250 $m^2$/g or less, or 240 $m^2$/g or less.

<Particle diameter $D_{50}$>

The particle diameter $D_{50}$ of the zirconia-containing alumina-based composite oxide is preferably 2.0 $\mu$m or more and 250 $\mu$m or less. The particle diameter $D_{50}$ is more preferably 3.0 $\mu$m or more, and still more preferably 4.0 $\mu$m or more. The particle diameter $D_{50}$ is more preferably 280 $\mu$m or less, and still more preferably 250 $\mu$m or less. The particle diameter $D_{50}$ refers to a value acquired by the method described in Examples.

The zirconia-containing alumina-based composite oxide contains alumina. The content of alumina is preferably 15% by mass or more and 97% by mass or less. When the content of alumina is 15% by mass or more, a decrease in the specific surface area due to exposure to a high temperature can be further suppressed. When the content of alumina is 97% by mass or less, segregation of elements is reduced, so that crystallization of alumina due to exposure to a high temperature can be suppressed.

The content of alumina is more preferably 17% by mass or more, and still more preferably 19% by mass or more. The content of alumina is more preferably 96% by mass or less, and still more preferably 95% by mass or less.

The zirconia-containing alumina-based composite oxide contains zirconia. The content of zirconia is preferably 0.1% by mass or more and 75% by mass or less. When the content of zirconia is 0.1% by mass or more, a decrease in the specific surface area due to exposure to a high temperature can be further suppressed because of the stabilization effect by diffusion of elements into alumina. When the content of zirconia is 75% by mass or less, segregation of elements is reduced, so that crystallization of zirconia due to exposure to a high temperature can be suppressed.

The content of zirconia is more preferably 1% by mass or more, and still more preferably 2% by mass or more. The content of zirconia is more preferably 73% by mass or less, and still more preferably 70% by mass or less.

In the zirconia-containing alumina-based composite oxide, the total content of zirconia and alumina is preferably 15% by mass or more and 99% by mass or less when the entire amount of the zirconia-containing alumina-based composite oxide is 100% by mass. By adjusting the total content of zirconia and alumina to 15% by mass or more and 99% by mass or less, a decrease in the specific surface area due to exposure to a high temperature can be further suppressed.

The total content of zirconia and alumina is more preferably 16% by mass or more, and still more preferably 17% by mass or more when the entire amount of the zirconia-containing alumina-based composite oxide is 100% by mass. The total content of zirconia and alumina is more preferably 98% by mass or less, and still more preferably 97% by mass or less when the entire amount of the zirconia-containing alumina-based composite oxide is 100% by mass.

The zirconia-containing alumina-based composite oxide preferably contains an oxide of a rare earth element other than Pm. When an oxide of a rare earth element other than Pm is contained, a decrease in the specific surface area due to exposure to a high temperature can be further suppressed.

The zirconia-containing alumina-based composite oxide preferably contains oxides of Ce, La, Nd, Pr, and Y among oxides of rare earth elements other than Pm. When the zirconia-containing alumina-based composite oxide contains oxides of Ce, La, Nd, Pr, and Y, a decrease in the specific surface area due to exposure to a high temperature can be particularly suppressed.

When the oxide of a rare earth element other than Pm is contained, the content of the oxide of a rare earth element other than Pm is preferably 1% by mass or more and 70% by mass or less when the entire amount of the zirconia-containing alumina-based composite oxide is 100% by mass. When the content of the oxide of a rare earth element other than Pm is 1% by mass or more, a decrease in specific surface area due to exposure to a high temperature can be suitably suppressed. In addition, when the content of the oxide of a rare earth element other than Pm is 70% by mass or less, the segregation of the element is reduced, so that crystallization of alumina and zirconia due to exposure to a high temperature can be suppressed.

The content of the oxide of a rare earth element other than Pm is more preferably 1.5% by mass or more, and still more preferably 2% by mass or more when the entire amount of the zirconia-containing alumina-based composite oxide is 100% by mass. The content of the oxide of a rare earth element other than Pm is more preferably 65% by mass or less, and still more preferably 60% by mass or less when the entire amount of the zirconia-containing alumina-based composite oxide is 100% by mass.

The zirconia-containing alumina-based composite oxide may contain one or more members selected from (A) an oxide of at least one element selected from the group consisting of In, Si, Sn, Bi, P, and Zn; (B) transition metal oxides (excluding oxides of rare earth elements and precious metal elements); and (C) alkaline earth metal oxides. These components (A) to (C) are also referred to as "other oxides" below.

Examples of the transition metal oxides include oxides of one or more selected from the group consisting of Ti, V, Cr, Mn, Fe, Co, Ni, Cu, Nb, Mo, Ta, and W. Examples of the alkaline earth metal oxide include oxides of one or more selected from the group consisting of Mg, Ca, Sr and Ba.

When the zirconia-containing alumina-based composite oxide contains the other oxide, the content of the other oxide is preferably 0.1% by mass or more and 30% by mass or less when the entire amount of the zirconia-containing alumina-based composite oxide is 100% by mass. The content of the other oxide is more preferably 0.3% by mass or more, and still more preferably 0.5% by mass or more when the entire amount of the zirconia-containing alumina-based composite oxide is 100% by mass. The content of the other oxide is more preferably 25% by mass or less, and still more preferably 20% by mass or less when the entire amount of the zirconia-containing alumina-based composite oxide is 100% by mass.

Preferable composition ratios of the zirconia-containing alumina-based composite oxide include combinations not exceeding 100% by mass in total enumerated as examples below.

(1) Preferably,

alumina: 15% or more and 97% or less
zirconia: 0.1% or more and 75% or less
oxides of rare earth elements: 1% or more and 70% or less other oxides: 0% or more and 30% or less

(2) More preferably,

alumina: 17% or more and 96% or less
zirconia: 1% or more and 73% or less
oxides of rare earth elements: 1.5% or more and 65% or less other oxides: 0% or more and 25% or less

(3) Still more preferably,

alumina: 19% or more and 96% or less
zirconia: 2% or more and 70% or less
oxides of rare earth elements: 2% or more and 60% or less other oxides: 0% or more and 20% or less

(4) Particularly preferably,

> alumina: 20% or more and 96% or less
> zirconia: 3% or more and 70% or less
> oxides of rare earth elements: 3% or more and 60% or less other oxides: 0% or more and 18% or less

The use of the zirconia-containing alumina-based composite oxide is not particularly limited, and examples thereof include a catalyst support of a catalyst for exhaust gas purification (catalyst support for exhaust gas purification).

[Method for producing zirconia-containing alumina-based composite oxide]

Hereinafter, one example of a method for producing a zirconia-containing alumina-based composite oxide will be described. However, the method for producing a zirconia-containing alumina-based composite oxide of the present invention is not limited to the following exemplification.

The method for producing a zirconia-containing alumina-based composite oxide according to the present embodiment includes:

> step 1 of obtaining solution A in which a basic zirconium salt is added to an aqueous solution of a soluble carbonate and/or a soluble hydrogen carbonate;
> step 2 of obtaining solution B containing a raw material salt containing aluminum and a raw material salt containing zirconium;
> step 3 of obtaining a precipitate of a zirconium-containing aluminum-based composite hydroxide by mixing the solution A and the solution B; and
> step 4 of obtaining a zirconia-containing alumina-based composite oxide by heat-treating the precipitate,
> in which
> the amount of the basic zirconium salt to be added in the step 1 is an amount such that the amount of zirconia accounting for in a zirconia-containing alumina-based composite oxide to be obtained is 1 to 95% by mass,
> the amount of the raw material salt containing zirconium to be added in the step 2 is an amount such that the amount of zirconia accounting for in the zirconia-containing alumina-based composite oxide to be obtained is 5 to 99% by mass, and
> a total of the zirconia contained in the basic zirconium salt to be added in the step 1 and the zirconia contained in the raw material salt containing zirconium to be added in the step 2 is an amount such that the total is 100% by mass of the zirconia accounting for in the zirconia-containing alumina-based composite oxide to be obtained.

Hereinafter, each step of the method for producing a zirconia-containing alumina-based composite oxide according to the present embodiment will be described.

(1) Step 1

In the step 1, solution A in which a basic zirconium salt is added to an aqueous solution of a soluble carbonate and/or a soluble hydrogen carbonate is obtained.

Specifically, in the step **1**, first, a soluble carbonate and/or a soluble hydrogen carbonate is prepared.

Examples of the soluble carbonate include ammonium carbonate and sodium carbonate. Examples of the soluble hydrogen carbonate include ammonium bicarbonate and sodium hydrogen carbonate. Ammonium carbonate is preferable as the soluble carbonate and ammonium bicarbonate is preferable as the soluble hydrogen carbonate from the viewpoint of being able to inhibit impurities from remaining.

Next, the soluble carbonate and/or the soluble hydrogen carbonate is dispersed in water at a prescribed ratio to afford an aqueous solution. At this time, it is preferable to use ammonia water to make the aqueous solution alkaline. The concentration ((w/w)%) of the aqueous solution is preferably 1% or more and 25% or less. By setting the concentration to 1% or more, the concentration can be increased to a certain extent, and the treatment time can be suitably adjusted. By setting the concentration to 20% or less, the increase in viscosity during neutralization can be suppressed, and the compounding can be performed suitably. The purity of the raw materials is preferably 95% or more, and more preferably 98% or more. The ammonia water is preferably adjusted such that the pH of the resulting aqueous solution is in a range of 7.5 to 14.0.

As the aqueous solution, a commercially available product prepared in advance as an aqueous solution may be used.

Next, a basic zirconium salt is added to the aqueous solution to afford solution A.

Examples of the basic zirconium salt include sodium zirconium carbonate, ammonium zirconium carbonate, potassium zirconium carbonate, ammonium zirconium oxalate, sodium zirconium oxalate, and potassium zirconium oxalate. The basic zirconium salt is preferably used in the form of an aqueous solution.

The amount of the basic zirconium salt to be added in the step 1 is an amount such that the amount of zirconia accounting for in the zirconia-containing alumina-based composite oxide to be obtained is 1 to 95% by mass. The reason will be described later.

(2) Step 2

In the step 2, solution B containing a raw material salt containing aluminum and a raw material salt containing zirconium is obtained. The solution B may be a solution containing only aluminum as metal, or may be a solution containing two or more metals including aluminum.

Examples of the raw material salt containing aluminum include at least one of aluminum nitrate, aluminum chloride, and the like. Among them, a nitrate-based salt is preferred rather than a chloride-based salt as the raw material salt from the viewpoint of being able to inhibit impurities from remaining.

Examples of metal other than aluminum include one or more rare earth elements other than 1) cerium, 2) zirconium, and 3) Pm.

Examples of the raw material salt containing cerium include at least one of cerium nitrate, cerium chloride, or cerium acetate. Among these, cerium nitrate that is a nitrate is preferred.

The raw material salt containing zirconium may be any salt that supplies zirconium ions, examples thereof include at least one of zirconium oxynitrate, zirconium oxychloride, or zirconium nitrate. Among these, zirconium oxynitrate that is a nitrate is preferred.

Examples of rare earth elements other than Pm include at least one among Sc, Y, La, Nd, Pr, Sm, Eu, Gd, Tb, Dy, Ho, Er, Tm, and Lu.

Besides those enumerated above, the solution B may contain one or more elements selected from (A) at least one element selected from the group consisting of In, Si, Sn, Bi, P, and Zn, (B) transition metal elements (excluding rare earth elements and precious metal elements), and (C) alkaline earth metal elements.

The raw materials for the rare earth elements, transition metal elements (excluding rare earth elements and precious metal elements), alkaline earth metals, and In, Si, Sn, Bi, and P are not particularly limited as long as they are soluble in water. Examples thereof include nitrates, sulfates, acetates, chlorides, and bromides, but nitrate-based raw materials are preferred as the raw material salt since remaining of impurities can be suppressed. The purity of these raw materials is preferably 95% or more, more preferably 98% or more.

The solvent for preparing the solution B may be appropriately selected depending on the kind of raw material salt, and the like, but usually, it is desirable to use water (pure water, ion-exchanged water or the like: the same applies below).

Next, these compounds (metal salts) prepared at a prescribed ratio are mixed. The metal salt concentration in the solution B is preferably 1% or more and 15% or less in terms of oxide. By setting the metal salt concentration to 1% or more, the concentration can be increased to a certain extent, and the treatment time can be suitably adjusted. By setting the metal salt concentration to 15% or less, the increase in viscosity during neutralization can be suppressed, and the compounding can be performed suitably.

The amount of the raw material salt containing zirconium to be added in the step 2 is an amount such that the amount of zirconia in the zirconia-containing alumina-based composite oxide to be obtained is 5 to 99% by mass.

The total of the zirconia contained in the basic zirconium salt to be added in the step 1 and the zirconia contained in the raw material salt containing zirconium to be added in the step 2 is an amount such that the total is 100% by mass of the zirconia accounting for in the zirconia-containing alumina-based composite oxide to be obtained.

The R can be controlled to be a proper value by adjusting the amount of the basic zirconium salt to be added in the step 1 to an amount such that the amount of zirconia accounting for in the zirconia-containing alumina-based composite oxide to be obtained is 1 to 95% by mass, and adding the remaining zirconia in the step 2.

(3) Step 3

In the step 3, the solution A and the solution B are mixed to afford a precipitate of a zirconium-containing aluminum-based composite hydroxide. The hydroxide may contain a carbonate.

Specifically, in the step 3, first, the solution A obtained in the step 1 and the solution B obtained in the step 2 are mixed and neutralized. There is no particular limitation on the mixing, but from the viewpoint of productivity such as filtration properties in the next step, it is preferable to add the solution B prepared in the step 2 to the solution A prepared in the step 1.

Next, the generated zirconium-containing alumina-based composite hydroxide is collected by a solid-liquid separation method. The solid-liquid separation method may be carried out, for example, in accordance with a known method such as filtration, centrifugation, or decantation.

Next, if necessary, the collected substance may be suspended in diluted ammonia water, and aged at 20°C or more and 80°C or less for 10 minutes or more and 1500 minutes or less. The concentration of the diluted ammonia water is preferably in a range of 0.1% by mass or more and 15% by mass or less, and more preferably in a range of 0.2% by mass or more and 10% by mass or less. By setting the concentration of the diluted ammonia water within the above range, impurities other than the target composition can be removed. In addition, impurities that promote crystal growth of alumina and zirconia can be removed.

The amount of the diluted ammonia water to be added to the collected substance is preferably in a range of 0.1 g or more and 1000 g or less, and preferably 1 g or more and 100 g or less, based on 100 g in terms of oxide. By setting the amount of the diluted ammonia water to be added to the collected substance within the above range, impurities other than the target composition can be removed. In addition, impurities that promote crystal growth of alumina and zirconia can be removed.

The temperature in the aging is more preferably 20°C or more and 75°C or less, and still more preferably 25°C or more and 70°C or less.

The time of the aging is more preferably 15 minutes or more and 900 minutes or less, and still more preferably 20 minutes or more and 360 minutes or less.

By performing the aging, impurities other than the target composition can be removed. In addition, impurities that promote crystal growth of alumina and zirconia can be removed.

When aging is performed, the resulting suspension is collected by a solid-liquid separation method. The solid-liquid separation method may be carried out, for example, in accordance with a known method such as filtration, centrifugation, or decantation.

After the collection, it is preferable to wash the obtained zirconium-containing alumina-based composite hydroxide with water, as necessary, to remove attached impurities.

The obtained zirconium-containing alumina-based composite hydroxide may be further dried, as necessary. The drying method may be carried out according to known methods, and may be, for example, any of natural drying or drying by heating. If necessary, pulverization treatment, classification treatment, and the like may be carried out after drying treatment.

(4) Step 4

In the step 4, heat treatment is performed on the precipitate (collected substance) to afford a zirconium-containing alumina-based composite oxide.

The heat treatment temperature is preferably 400°C or more and 1200°C or less, more preferably 500°C or more and 1150°C or less, and still more preferably 600°C or more and 1100°C or less.

The heat treatment time is preferably 1 hour or more and 12 hours or less, more preferably 2 hours or more and 11 hours or less, and still more preferably 3 hours or more and 10 hours or less.

The composite oxide obtained by the heat treatment can be pulverized, as necessary. The pulverization is not particularly limited, but may be carried out using a general pulverizer such as a planetary mill, a ball mill, a hammer mill, or a jet mill.

In the method for producing a zirconia-containing alumina-based composite oxide described above, fine $ZrO_2$ can be highly dispersed in a precursor (in the zirconium-containing aluminum-based composite hydroxide) by precipitating an aluminum salt (step 3) using a basic zirconium solution (solution A) as a neutralizing agent raw material. As a result, crystallization of a specific element at the time of high temperature heating is suppressed, so that the $\theta$ phase is maintained even after the high temperature heating.

As described above, in the zirconia-containing alumina-based composite oxide obtained by the production method according to the present embodiment, the crystallization of an $\alpha$ phase under the high temperature heating condition is suppressed, and a decrease in specific surface area is suppressed.

EXAMPLES

Hereinafter, the present invention will be described in detail with reference to Examples, but the present invention is not limited to the following Examples, and other examples are possible as long as they do not depart from the gist of the present invention. The zirconia-containing alumina-based composite oxides obtained in Examples and Comparative Examples contain 1 to 3 mass% of hafnium as unavoidable impurities with respect to zirconium (calculated by the following formula (X)).

([Mass of hafnium]/([mass of zirconium] + [mass of hafnium])) $\times$ 100 (%)　　　　　　　　　　<Formula (X)>

The maximum value and minimum value of the content of each component shown in the following Examples should be considered as the preferred minimum value and maximum value of the present invention regardless of the content of other components.

In addition, the maximum value and minimum value of the measured values shown in the following Examples should be considered to be the preferred minimum value and maximum value of the present invention regardless of the content (composition) of each component.

[Preparation of zirconia-containing alumina-based composite oxide]

(Example 1)

250 g of sodium carbonate was dissolved in 1750 g of water, 250 g of ammonia water having a concentration of 20% by mass was added thereto, and then a sodium zirconium carbonate solution (DAIICHI KIGENSO KAGAKU KOGYO CO., LTD., 0.3 g in terms of zirconium oxide) was added thereto, whereby an aqueous zirconium-containing alkaline solution (solution A) was prepared.

Subsequently, aluminum nitrate nonahydrate (Wako Pure Chemical Industries, Ltd., Guaranteed Reagent, 96.0 g in terms of aluminum oxide), zirconium oxynitrate (Mitsuwa Chemicals Co., Ltd., Guaranteed Reagent, 1.7 g in terms of zirconium oxide), and lanthanum nitrate hexahydrate (Wako Pure Chemical Industries, Ltd., Guaranteed Reagent, 2.0 g in terms of lanthanum oxide) were dissolved in deionized water such that the concentration would be 5% in terms of oxide, whereby an aqueous nitrate solution (solution B) was prepared.

Then, the aqueous nitrate solution (solution B) was added to the aqueous zirconium-containing alkaline solution (solution A), affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 1.

(Example 2)

250 g of sodium carbonate was dissolved in 1750 g of water, 250 g of ammonia water having a concentration of 20% by mass was added thereto, and then a sodium zirconium carbonate solution (DAIICHI KIGENSO KAGAKU KOGYO CO., LTD., 1.8 g in terms of zirconium oxide) was added thereto, whereby an aqueous zirconium-containing alkaline solution (solution A) was prepared.

Subsequently, aluminum nitrate nonahydrate (Wako Pure Chemical Industries, Ltd., Guaranteed Reagent, 96.0 g in terms of aluminum oxide), zirconium oxynitrate (Mitsuwa Chemicals Co., Ltd., Guaranteed Reagent, 0.2 g in terms of zirconium oxide), and lanthanum nitrate hexahydrate (Wako Pure Chemical Industries, Ltd., Guaranteed Reagent, 2.0 g in terms of lanthanum oxide) were dissolved in deionized water such that the concentration would be 5% in terms of oxide, whereby an aqueous nitrate solution (solution B) was prepared.

Then, the aqueous nitrate solution (solution B) was added to the aqueous zirconium-containing alkaline solution (solution A), affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 2.

(Example 3)

230 g of sodium carbonate was dissolved in 1700 g of water, 230 g of ammonia water having a concentration of 20% by mass was added thereto, and then a sodium zirconium carbonate solution (DAIICHI KIGENSO KAGAKU KOGYO CO., LTD., 0.6 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 90.0 g in terms of aluminum oxide), zirconium oxynitrate (Mitsuwa Chemicals Co., Ltd., Guaranteed Reagent, 3.4 g in terms of zirconium oxide), cerium(III) nitrate hexahydrate (Wako Pure Chemical Industries, Ltd., Guaranteed Reagent, 4. 0 g in terms of cerium oxide), and lanthanum nitrate hexahydrate (Wako Pure Chemical Industries, Ltd., Guaranteed Reagent, 2.0 g in terms of lanthanum oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 3.

(Example 4)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 1.2 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 78.0 g in terms of aluminum oxide), zirconium oxynitrate (Mitsuwa Chemicals Co., Ltd., Guaranteed Reagent, 6.8 g in terms of zirconium oxide), cerium(III) nitrate hexahydrate (Wako Pure Chemical Industries, Ltd., Guaranteed Reagent, 8.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 4.

(Example 5)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 2.3 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 69.0 g in terms of aluminum oxide), zirconium oxynitrate (Mitsuwa Chemicals Co., Ltd., Guaranteed Reagent, 12.7 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), praseodymium(III) nitrate hydrate (Wako Pure Chemical Industries, Ltd., Guaranteed Reagent, 2.0 g in terms of praseodymium oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 1100°C for 10 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 5.

(Example 6)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 12.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 69.0 g in terms of aluminum oxide), zirconium oxynitrate (Mitsuwa Chemicals Co., Ltd., Guaranteed Reagent, 3.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), praseodymium(III) nitrate hydrate (Wako Pure Chemical Industries, Ltd., Guaranteed Reagent, 2.0 g in terms of praseodymium oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 1100°C for 10 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 6.

(Example 7)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 3.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 64.0 g in terms of aluminum oxide), zirconium oxynitrate (Mitsuwa Chemicals Co., Ltd., Guaranteed Reagent, 17.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and praseodymium(III) nitrate hydrate (Wako Pure Chemical Industries, Ltd., Guaranteed Reagent, 2.0 g in terms of praseodymium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 7.

(Example 8)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 4.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 44.0 g in terms of aluminum oxide), zirconium oxynitrate (Mitsuwa Chemicals Co., Ltd., Guaranteed Reagent, 25.5 g in terms of zirconium oxide), cerium(III) nitrate hexahydrate (Wako Pure Chemical Industries, Ltd., Guaranteed Reagent, 20.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 8.

(Example 9)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 7.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 30.0 g in terms of aluminum oxide), zirconium oxynitrate (Mitsuwa Chemicals Co., Ltd., Guaranteed Reagent, 42.5 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 4.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 4.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 9.

(Example 10)

110 g of sodium carbonate was dissolved in 1090 g of water, 160 g of ammonia water having a concentration of 20% by mass was added thereto, and then a sodium zirconium carbonate solution (DAIICHI KIGENSO KAGAKU KOGYO CO., LTD., 9.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 20.0 g in terms of aluminum oxide), zirconium oxynitrate (Mitsuwa Chemicals Co., Ltd., Guaranteed Reagent, 51.0 g in terms of zirconium oxide), cerium(III) nitrate hexahydrate (Wako Pure Chemical Industries, Ltd., Guaranteed Reagent, 10. 0 g in terms of cerium oxide), lanthanum nitrate hexahydrate (Wako Pure Chemical Industries, Ltd., Guaranteed Reagent, 4.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 4.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 500°C for 3 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 10.

(Example 11)

110 g of sodium carbonate was dissolved in 1090 g of water, 160 g of ammonia water having a concentration of 20% by mass was added thereto, and then a sodium zirconium carbonate solution (DAIICHI KIGENSO KAGAKU KOGYO CO., LTD., 10.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 20.0 g in terms of aluminum oxide), zirconium oxynitrate (Mitsuwa Chemicals Co., Ltd., Guaranteed Reagent, 59.5 g in terms of zirconium oxide), lanthanum nitrate hexahydrate (Wako Pure Chemical Industries, Ltd., Guaranteed Reagent, 4.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 4.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 600°C for 3 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 11.

(Example 12)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 7.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 42.0 g in terms of aluminum oxide), zirconium oxynitrate (Mitsuwa Chemicals Co., Ltd., Guaranteed Reagent, 42.5 g in terms of zirconium oxide), lanthanum nitrate hexahydrate (Wako Pure Chemical Industries, Ltd., Guaranteed Reagent, 4.0 g in terms of lanthanum oxide), and yttrium(III) nitrate hydrate (Wako Pure Chemical Industries, Ltd., Guaranteed Reagent, 4.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 12.

(Example 13)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 3.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 44.0 g in terms of aluminum oxide), zirconium oxynitrate (Mitsuwa Chemicals Co., Ltd., Guaranteed Reagent, 17.0 g in terms of zirconium oxide), cerium(III) nitrate hexahydrate (Wako Pure Chemical Industries, Ltd., Guaranteed Reagent, 30.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 13.

(Example 14)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 3.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 34.0 g in terms of aluminum oxide), zirconium oxynitrate (Mitsuwa Chemicals Co., Ltd., Guaranteed Reagent, 17.0 g in terms of zirconium oxide), cerium(III) nitrate hexahydrate (Wako Pure Chemical Industries, Ltd., Guaranteed Reagent, 40.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 14.

(Example 15)

170 g of sodium carbonate was dissolved in 1230 g of water, 200 g of ammonia water having a concentration of 20% by mass was added thereto, and then a sodium zirconium carbonate solution (DAIICHI KIGENSO KAGAKU KOGYO CO., LTD., 3.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 54.0 g in terms of aluminum oxide), zirconium oxynitrate (Mitsuwa Chemicals Co., Ltd., Guaranteed Reagent, 17.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 4.0 g in terms of lanthanum oxide), neodymium(III) nitrate hexahydrate (Wako Pure Chemical Industries, Ltd., Guaranteed Reagent, 4.0 g in terms of neodymium oxide), praseodymium(III) nitrate hydrate (Wako Pure Chemical Industries, Ltd., Guaranteed Reagent, 4.0 g in terms of praseodymium oxide), and yttrium(III) nitrate hydrate (Wako Pure Chemical Industries, Ltd., Guaranteed Reagent, 4.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 1100°C for 1 hour in the air using an electric furnace, affording a zirconia-containing alumina-based composite oxide.

The zirconia-containing alumina-based composite oxide was pulverized with a hammer mill, affording a zirconia-containing alumina-based composite oxide according to Example 15.

(Example 16)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 3.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 30.0 g in terms of aluminum oxide), zirconium oxynitrate (Mitsuwa Chemicals Co., Ltd., Guaranteed Reagent, 17.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 10.0 g in terms of lanthanum oxide), neodymium(III) nitrate hexahydrate (Wako Pure Chemical Industries, Ltd., Guaranteed Reagent, 10.0 g in terms of neodymium oxide), praseodymium(III) nitrate hydrate (Wako Pure Chemical Industries, Ltd., Guaranteed Reagent, 10.0 g in terms of praseodymium oxide), and yttrium(III) nitrate hydrate (Wako Pure Chemical Industries, Ltd., Guaranteed Reagent, 10.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 16.

(Example 17)

170 g of sodium carbonate was dissolved in 1230 g of water, 200 g of ammonia water having a concentration of 20% by mass was added thereto, and then a sodium zirconium carbonate solution (DAIICHI KIGENSO KAGAKU KOGYO CO., LTD., 4.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 50.0 g in terms of aluminum oxide), zirconium oxynitrate (Mitsuwa Chemicals Co., Ltd., Guaranteed Reagent, 25.5 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), yttrium(III) nitrate hydrate (Wako Pure Chemical Industries, Ltd., Guaranteed Reagent, 2.0 g in terms of yttrium oxide), and magnesium nitrate (4.0 g in terms of magnesium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 17.

(Example 18)

170 g of sodium carbonate was dissolved in 1230 g of water, 200 g of ammonia water having a concentration of 20% by mass was added thereto, and then a sodium zirconium carbonate solution (DAIICHI KIGENSO KAGAKU KOGYO CO., LTD., 4.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 50.0 g in terms of aluminum oxide), zirconium oxynitrate (Mitsuwa Chemicals Co., Ltd., Guaranteed Reagent, 25.5 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), yttrium(III) nitrate hydrate (Wako Pure Chemical Industries, Ltd., Guaranteed Reagent, 2.0 g in terms of yttrium oxide), and calcium nitrate (4.0 g in terms of calcium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 18.

(Example 19)

170 g of sodium carbonate was dissolved in 1230 g of water, 200 g of ammonia water having a concentration of 20% by mass was added thereto, and then a sodium zirconium carbonate solution (DAIICHI KIGENSO KAGAKU KOGYO CO., LTD., 4.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 50.0 g in terms of aluminum oxide), zirconium oxynitrate (Mitsuwa Chemicals Co., Ltd., Guaranteed Reagent, 25.5 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), yttrium(III) nitrate hydrate (Wako Pure Chemical Industries, Ltd., Guaranteed Reagent, 2.0 g in terms of yttrium oxide), and strontium nitrate (4.0 g in terms of strontium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 19.

(Example 20)

170 g of sodium carbonate was dissolved in 1230 g of water, 200 g of ammonia water having a concentration of 20% by mass was added thereto, and then a sodium zirconium carbonate solution (DAIICHI KIGENSO KAGAKU KOGYO CO., LTD., 4.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 50.0 g in terms of aluminum oxide), zirconium oxynitrate (Mitsuwa Chemicals Co., Ltd., Guaranteed Reagent, 25.5 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), yttrium(III) nitrate hydrate (Wako Pure Chemical Industries, Ltd., Guaranteed Reagent, 2.0 g in terms of yttrium oxide), and barium nitrate (4.0 g in terms of barium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 20.

(Example 21)

170 g of sodium carbonate was dissolved in 1230 g of water, 200 g of ammonia water having a concentration of 20% by mass was added thereto, and then a sodium zirconium carbonate solution (DAIICHI KIGENSO KAGAKU KOGYO CO., LTD., 4.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 50.0 g in terms of aluminum oxide), zirconium oxynitrate (Mitsuwa Chemicals Co., Ltd., Guaranteed Reagent, 25.5 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), yttrium(III) nitrate hydrate (Wako Pure Chemical Industries, Ltd., Guaranteed Reagent, 2.0 g in terms of yttrium oxide), and ammonium phosphate (4.0 g in terms of phosphate) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 21.

(Example 22)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 8.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 30.0 g in terms of aluminum oxide), zirconium oxynitrate (Mitsuwa Chemicals Co., Ltd., Guaranteed Reagent, 32.0 g in terms of zirconium oxide), cerium(III) nitrate hexahydrate (Wako Pure Chemical Industries, Ltd., Guaranteed Reagent, 20.0 g in terms of cerium oxide), lanthanum nitrate hexahydrate (Wako Pure Chemical Industries, Ltd., Guaranteed Reagent, 4.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 4.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 22.

(Example 23)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 6.6 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 30.0 g in terms of aluminum oxide), zirconium oxynitrate (Mitsuwa Chemicals Co., Ltd., Guaranteed Reagent, 37.4 g in terms of zirconium oxide), cerium(III) nitrate hexahydrate (Wako Pure Chemical Industries, Ltd., Guaranteed Reagent, 20.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 23.

(Example 24)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 6.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 29.5 g in terms of aluminum oxide), zirconium oxynitrite (Mitsuwa Chemicals Co., Ltd., Guaranteed Reagent, 37.0 g in terms of zirconium oxide), cerium(III) nitrate hexahydrate (Wako Pure Chemical Industries, Ltd., Guaranteed Reagent, 20.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), yttrium(III) nitrate hydrate (Wako Pure Chemical Industries, Ltd., Guaranteed Reagent, 2.0 g in terms of yttrium oxide), and iron(III) nitrate nonahydrate (Wako Pure Chemical Industries, Ltd., Guaranteed Reagent, 1.0 g in terms of iron oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 24.

(Example 25)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 6.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 29.5 g in terms of aluminum oxide), zirconium oxynitrite (Mitsuwa Chemicals Co., Ltd., Guaranteed Reagent, 37.0 g in terms of zirconium oxide), cerium(III) nitrate hexahydrate (Wako Pure Chemical Industries, Ltd., Guaranteed Reagent, 20.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), yttrium(III) nitrate hydrate (Wako Pure Chemical Industries, Ltd., Guaranteed Reagent, 2.0 g in terms of yttrium oxide), and diamminedinitroplatinum(II) nitrate solution (Tanaka Precious Metals, 1.0 g in terms of metal platinum) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 25.

(Example 26)

150 g of sodium carbonate was dissolved in 1150 g of water, 200 g of ammonia water having a concentration of 20% by mass was added thereto, and then a sodium zirconium carbonate solution (DAIICHI KIGENSO KAGAKU KOGYO CO., LTD., 6.5 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 29.5 g in terms of aluminum oxide), zirconium oxynitrate (Mitsuwa Chemicals Co., Ltd., Guaranteed Reagent, 37.0 g in terms of zirconium oxide), cerium(III) nitrate hexahydrate (Wako Pure Chemical Industries, Ltd., Guaranteed Reagent, 20.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), yttrium(III) nitrate hydrate (Wako Pure Chemical Industries, Ltd., Guaranteed Reagent, 2.0 g in terms of yttrium oxide), and rhodium nitrate (Tanaka Precious Metals, 1.0 g in terms of metal rhodium) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water having a concentration of 20% by mass to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 26.

(Example 27)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 0.7 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 89.6 g in terms of aluminum oxide), zirconium oxynitrate (Mitsuwa Chemicals Co., Ltd., Guaranteed Reagent, 3.0 g in terms of zirconium oxide), cerium(III) nitrate hexahydrate (Wako Pure Chemical Industries, Ltd., Guaranteed Reagent, 3.7 g in terms of cerium oxide), lanthanum nitrate hexahydrate (Wako Pure Chemical Industries, Ltd., Guaranteed Reagent, 2.0 g in terms of lanthanum oxide), and strontium(II) nitrate (Wako Pure Chemical Industries, Ltd., Guaranteed Reagent, 1.0 g in terms of strontium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 27.

(Example 28)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 0.7 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 89.6 g in terms of aluminum oxide), zirconium oxynitrate (Mitsuwa Chemicals Co., Ltd., Guaranteed Reagent, 3.0 g in terms of zirconium oxide), cerium(III) nitrate hexahydrate (Wako Pure Chemical Industries, Ltd., Guaranteed Reagent, 3.7 g in terms of cerium oxide), lanthanum nitrate hexahydrate (Wako Pure Chemical Industries, Ltd., Guaranteed Reagent, 2.0 g in terms of lanthanum oxide), and ammonium dihydrogen phosphate (Wako Pure Chemical Industries, Ltd., Guaranteed Reagent, 1.0 g in terms of phosphoric acid) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 28.

(Example 29)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 0.7 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 89.6 g in terms of aluminum oxide), zirconium oxynitrate (Mitsuwa Chemicals Co., Ltd., Guaranteed Reagent, 3.0 g in terms of zirconium oxide), cerium(III) nitrate hexahydrate (Wako Pure Chemical Industries, Ltd., Guaranteed Reagent, 3.7 g in terms of cerium oxide), lanthanum nitrate hexahydrate (Wako Pure Chemical Industries, Ltd., Guaranteed Reagent, 2.0 g in terms of lanthanum oxide), and fumed silica AEROSIL (Nippon Aerosil, 1.0 g in terms of silica) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 29.

(Example 30)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 0.7 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 89.6 g in terms of aluminum oxide), zirconium oxynitrate (Mitsuwa Chemicals Co., Ltd., Guaranteed Reagent, 3.0 g in terms of zirconium oxide), cerium(III) nitrate hexahydrate (Wako Pure Chemical Industries, Ltd., Guaranteed Reagent, 3.7 g in terms of cerium oxide), lanthanum nitrate hexahydrate (Wako Pure Chemical Industries, Ltd., Guaranteed Reagent, 2.0 g in terms of lanthanum oxide), and titanium tetrachloride (IV) (Wako Pure Chemical Corporation, 1.0 g in terms of titanium dioxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 30.

(Example 31)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 4.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 60.0 g in terms of aluminum oxide), zirconium oxynitrate (Mitsuwa Chemicals Co., Ltd., Guaranteed Reagent, 22.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 31.

(Example 32)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 10.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 60.0 g in terms of aluminum oxide), zirconium oxynitrate (Mitsuwa Chemicals Co., Ltd., Guaranteed Reagent, 16.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 32.

(Example 33)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 16.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 60.0 g in terms of aluminum oxide), zirconium oxynitrate (Mitsuwa Chemicals Co., Ltd., Guaranteed Reagent, 10.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), and yttrium(III) nitrate hydrate (Wako Pure Chemical Industries, Ltd., Guaranteed Reagent, 2.0 g in terms of yttrium oxide) were dissolved in deionized water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Example 33.

(Comparative Example 1)

A 5% aqueous ammonium bicarbonate solution was prepared by dissolving 400 g of ammonium bicarbonate in 7600 g of water.

Subsequently, aluminum nitrate nonahydrate (Wako Pure Chemical Industries, Ltd., Guaranteed Reagent, 96.0 g in terms of aluminum oxide), zirconium oxynitrate (Mitsuwa Chemicals Co., Ltd., Guaranteed Reagent, 2.0 g in terms of zirconium oxide), and lanthanum nitrate hexahydrate (Wako Pure Chemical Industries, Ltd., Guaranteed Reagent, 2.0 g in terms of lanthanum oxide) were dissolved in ion-exchanged water such that the concentration would be 5% in terms of oxide, whereby an aqueous nitrate solution was prepared.

Next, the aqueous nitrate solution was added to the 5% aqueous ammonium bicarbonate solution, affording a precipitate of a zirconia-containing alumina-based composite hydroxide.

Next, the precipitate was collected by solid-liquid separation, and the solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Comparative Example 1.

(Comparative Example 2)

A 5% aqueous ammonium bicarbonate solution was prepared by dissolving 400 g of ammonium bicarbonate in 7600 g of water.

Subsequently, aluminum nitrate nonahydrate (Wako Pure Chemical Industries, Ltd., Guaranteed Reagent, 90.0 g in terms of aluminum oxide), zirconium oxynitrate (Mitsuwa Chemicals Co., Ltd., Guaranteed Reagent, 4.0 g in terms of zirconium oxide), cerium(III) nitrate hexahydrate (Wako Pure Chemical Industries, Ltd., Guaranteed Reagent, 4.0 g in terms of cerium oxide), and lanthanum nitrate hexahydrate (Wako Pure Chemical Industries, Ltd., Guaranteed Reagent, 2.0 g in terms of lanthanum oxide) were dissolved in ion-exchanged water such that the concentration would be 5% in terms of oxide, whereby an aqueous nitrate solution was prepared.

Next, the aqueous nitrate solution was added to the 5% aqueous ammonium bicarbonate solution, affording a precipitate of a zirconia-containing alumina-based composite hydroxide.

Next, the precipitate was collected by solid-liquid separation, and the solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Comparative Example 2.

(Comparative Example 3)

A 5% aqueous ammonium bicarbonate solution was prepared by dissolving 400 g of ammonium bicarbonate in 7600 g of water.

Subsequently, aluminum nitrate nonahydrate (Wako Pure Chemical Industries, Ltd., Guaranteed Reagent, 78.0 g in terms of aluminum oxide), zirconium oxynitrate (Mitsuwa Chemicals Co., Ltd., Guaranteed Reagent, 8.0 g in terms of zirconium oxide), cerium(III) nitrate hexahydrate (Wako Pure Chemical Industries, Ltd., Guaranteed Reagent, 8.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 2.0 g in terms of yttrium oxide) were dissolved in ion-exchanged water such that the concentration would be 5% in terms of oxide, whereby an aqueous nitrate solution was prepared.

Next, the aqueous nitrate solution was added to the 5% aqueous ammonium bicarbonate solution, affording a precipitate of a zirconia-containing alumina-based composite hydroxide.

Next, the precipitate was collected by solid-liquid separation, and the solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Comparative Example 3.

(Comparative Example 4)

A 5% aqueous ammonium bicarbonate solution was prepared by dissolving 400 g of ammonium bicarbonate in 7600 g of water.

Subsequently, aluminum nitrate nonahydrate (Wako Pure Chemical Industries, Ltd., Guaranteed Reagent, 64.0 g in terms of aluminum oxide), zirconium oxynitrate (Mitsuwa Chemicals Co., Ltd., Guaranteed Reagent, 20.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and praseodymium(III) nitrate hydrate (Wako Pure Chemical Industries, Ltd., Guaranteed Reagent, 2.0 g in terms of praseodymium oxide) were dissolved in ion-exchanged water such that the concentration would be 5% in terms of oxide, whereby an aqueous nitrate solution was prepared.

Next, the aqueous nitrate solution was added to the 5% aqueous ammonium bicarbonate solution, affording a precipitate of a zirconia-containing alumina-based composite hydroxide.

Next, the precipitate was collected by solid-liquid separation, and the solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Comparative Example 4.

(Comparative Example 5)

A 5% aqueous ammonium bicarbonate solution was prepared by dissolving 400 g of ammonium bicarbonate in 7600 g of water.

Subsequently, aluminum nitrate nonahydrate (Wako Pure Chemical Industries, Ltd., Guaranteed Reagent, 44.0 g in terms of aluminum oxide), zirconium oxynitrate (Mitsuwa Chemicals Co., Ltd., Guaranteed Reagent, 20.0 g in terms of zirconium oxide), cerium(III) nitrate hexahydrate (Wako Pure Chemical Industries, Ltd., Guaranteed Reagent, 30.0 g in terms of cerium oxide), lanthanum nitrate hexahydrate (Wako Pure Chemical Industries, Ltd., Guaranteed Reagent, 2.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 2.0 g in terms of yttrium oxide) were dissolved in ion-exchanged water such that the concentration would be 5% in terms of oxide, whereby an aqueous nitrate solution was prepared.

Next, the aqueous nitrate solution was added to the 5% aqueous ammonium bicarbonate solution, affording a precipitate of a zirconia-containing alumina-based composite hydroxide.

Next, the precipitate was collected by solid-liquid separation, and the solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Comparative Example 6.

(Comparative Example 6)

A 5% aqueous ammonium bicarbonate solution was prepared by dissolving 400 g of ammonium bicarbonate in 7600 g of water.

Subsequently, aluminum nitrate nonahydrate (Wako Pure Chemical Industries, Ltd., Guaranteed Reagent, 30.0 g in terms of aluminum oxide), zirconium oxynitrate (Mitsuwa Chemicals Co., Ltd., Guaranteed Reagent, 40.0 g in terms of zirconium oxide), cerium(III) nitrate hexahydrate (Wako Pure Chemical Industries, Ltd., Guaranteed Reagent, 20.0 g in terms of cerium oxide), lanthanum nitrate hexahydrate (Wako Pure Chemical Industries, Ltd., Guaranteed Reagent, 4.0 g in terms of lanthanum oxide), neodymium(III) nitrate hexahydrate (Wako Pure Chemical Industries, Ltd., Guaranteed Reagent, 2.0 g in terms of neodymium oxide), and yttrium(III) nitrate hydrate (Wako Pure Chemical Industries, Ltd., Guaranteed Reagent, 4.0 g in terms of yttrium oxide) were dissolved in ion-exchanged water such that the concentration would be 5% in terms of oxide, whereby an aqueous nitrate solution was prepared.

Next, the aqueous nitrate solution was added to the 5% aqueous ammonium bicarbonate solution, affording a precipitate of a zirconia-containing alumina-based composite hydroxide.

Next, the precipitate was collected by solid-liquid separation, and the solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Comparative Example 5.

**EP 4 606 771 A1**

(Comparative Example 7)

A 5% aqueous ammonium bicarbonate solution was prepared by dissolving 400 g of ammonium bicarbonate in 7600 g of water.

Subsequently, aluminum nitrate nonahydrate (Wako Pure Chemical Industries, Ltd., Guaranteed Reagent, 60.0 g in terms of aluminum oxide), zirconium oxynitrate (Mitsuwa Chemicals Co., Ltd., Guaranteed Reagent, 26.0 g in terms of zirconium oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), and yttrium(III) nitrate hydrate (Wako Pure Chemical Industries, Ltd., Guaranteed Reagent, 2.0 g in terms of yttrium oxide) were dissolved in ion-exchanged water such that the concentration would be 5% in terms of oxide, whereby an aqueous nitrate solution was prepared.

Next, the aqueous nitrate solution was added to the 5% aqueous ammonium bicarbonate solution, affording a precipitate of a zirconia-containing alumina-based composite hydroxide.

Next, the precipitate was collected by solid-liquid separation, and the solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Comparative Example 7.

(Comparative Example 8)

200 g of sodium carbonate was dissolved in 1300 g of water, 220 g of ammonia water having a concentration of 20% by mass was added thereto, and then a sodium zirconium carbonate solution (DAIICHI KIGENSO KAGAKU KOGYO CO., LTD., 26.0 g in terms of zirconium oxide) was added thereto, whereby an aqueous zirconium-containing alkaline solution was prepared.

Subsequently, aluminum nitrate nonahydrate (Wako Pure Chemical Industries, Ltd., Guaranteed Reagent, 60.0 g in terms of aluminum oxide), cerium(III) nitrate hexahydrate (Wako Pure Chemical Industries, Ltd., Guaranteed Reagent, 10.0 g in terms of cerium oxide), lanthanum nitrate hexahydrate (Wako Pure Chemical Industries, Ltd., Guaranteed Reagent, 2.0 g in terms of lanthanum oxide), and yttrium(III) nitrate hydrate (Wako Pure Chemical Industries, Ltd., Guaranteed Reagent, 2.0 g in terms of yttrium oxide) were dissolved in ion-exchanged water such that the concentration would be 5% in terms of oxide, whereby an aqueous nitrate solution was prepared.

Then, the aqueous nitrate solution was added to the aqueous zirconium-containing alkaline solution, affording a precipitate of a zirconia-containing alumina-based composite hydroxide.

Next, the precipitate was collected by solid-liquid separation, suspended in diluted ammonia water prepared by adding 200 g of ammonia water to 2000 g of water, and aged at 50°C for 180 minutes.

The suspension after the aging was collected by solid-liquid separation, and the resulting solid was fired at 900°C for 5 hours in the air using an electric furnace, affording a zirconia-containing alumina-based composite oxide.

The zirconia-containing alumina-based composite oxide was pulverized with a hammer mill, affording a zirconia-containing alumina-based composite oxide according to Comparative Example 8.

[X-ray diffraction spectrum]

The zirconia-containing alumina-based composite oxide of each of Examples and Comparative Examples were each heated under the atmospheric pressure (0.1013 MPa, in the air atmosphere) at 1200°C for 12 hours. For each of the zirconia-containing alumina-based composite oxides after heating, an X-ray diffraction spectrum was acquired using an X-ray diffractometer ("UltIma IV" manufactured by Rigaku Corporation). The measurement conditions were as follows.

<Measurement conditions>

Measuring device: X-ray diffractometer (UltIma IV manufactured by Rigaku Corporation)
Radiation source: CuKα radiation source
Tube voltage: 50 kV
Tube current: 30 mA
Scanning speed: $2\theta$ = 20° to 65°: 4°/min
Number of integrations: 1
Divergence slit: 1°
Scatter slit: 1°

27

Receiving slit: 0.3 mm
Monochromator: used

Thereafter, from the acquired X-ray diffraction spectrum (XRD profile), the peak intensity associated with the $\theta$-$Al_2O_3$ phase around $2\theta = 33°$ was defined as X, the peak intensity associated with the $\alpha$-$Al_2O_3$ phase around $2\theta = 26°$ was defined as Y, and [X/Y] was defined as R, and the R was determined. The results are shown in Tables 1 to 5.

In addition, [Z/W], namely, Tr was determined from the peak intensity Z associated with $ZrO_2$ around $2\theta = 30°$ in the obtained X-ray diffraction spectrum (XRD profile) and the mass ratio W of the oxide component of $ZrO_2$ to the entire zirconia-containing alumina-based composite oxide. The results are shown in Tables 1 to 5. The "peak intensity Z" means an absolute value of the peak intensity as can be seen from the fact that the unit of the $ZrO_2$ peak intensity in Tables 1 to 5 is cps (counts per second).

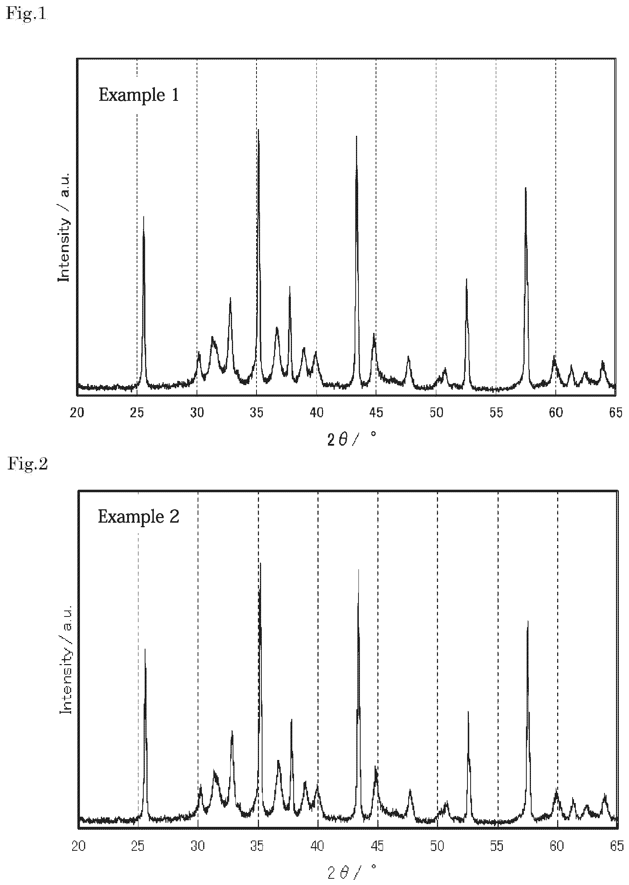

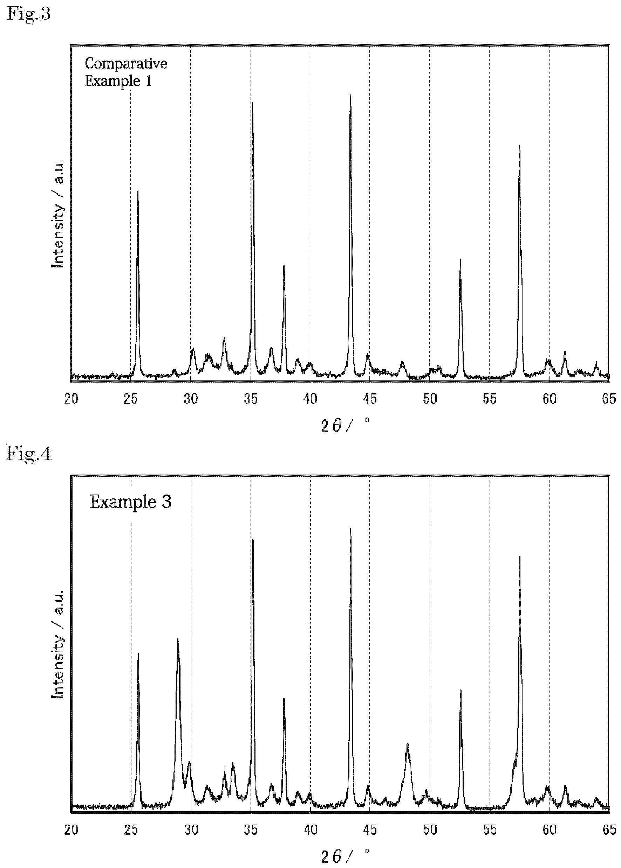

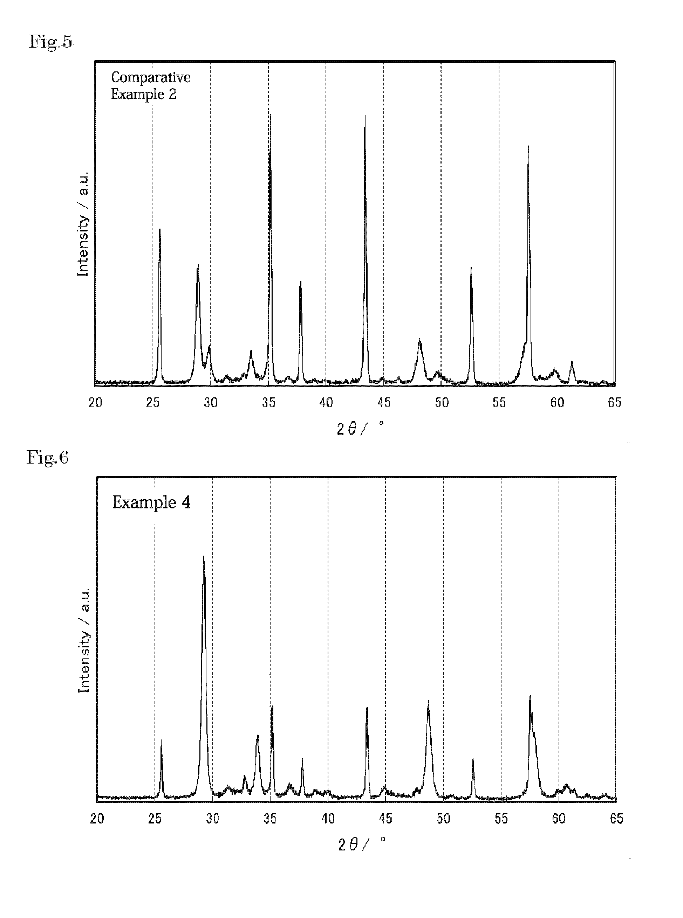

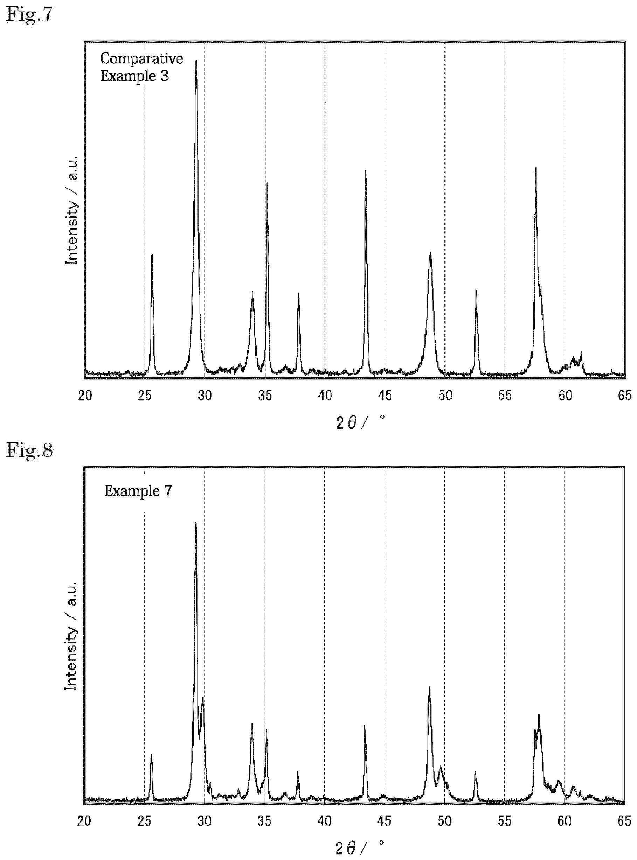

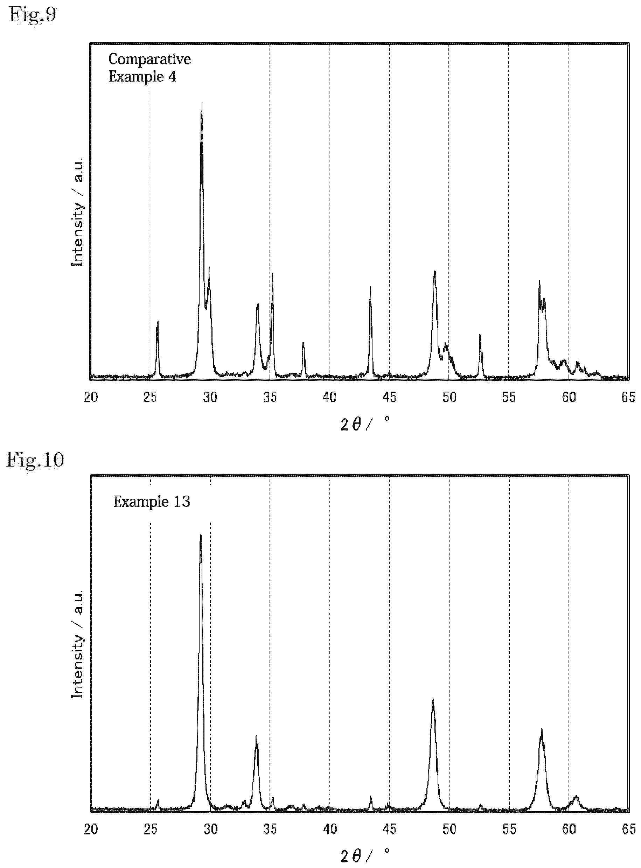

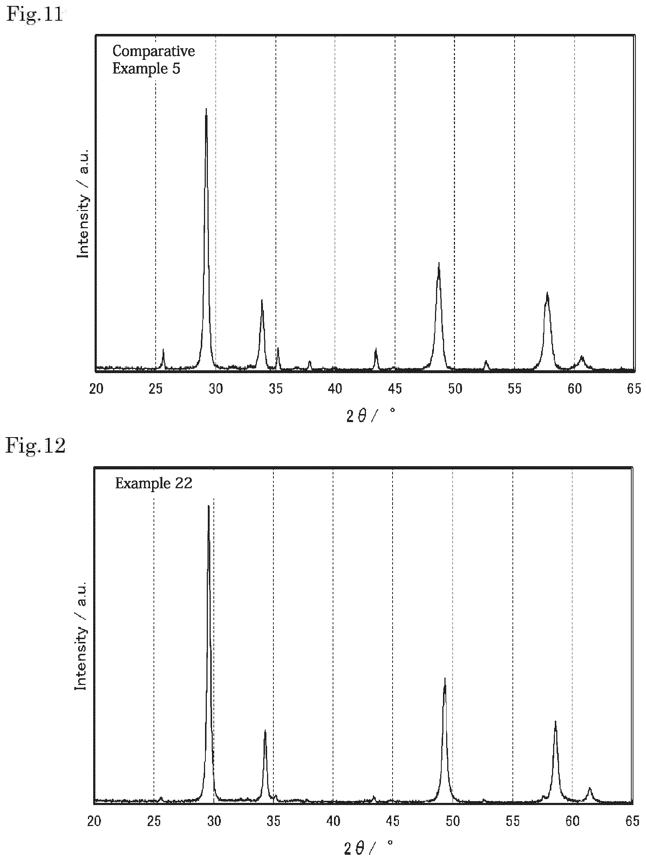

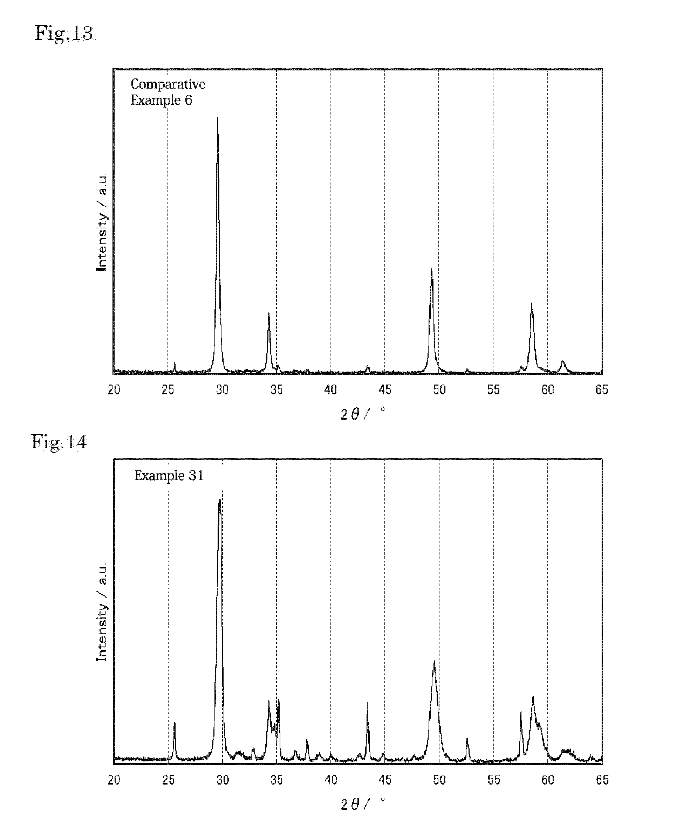

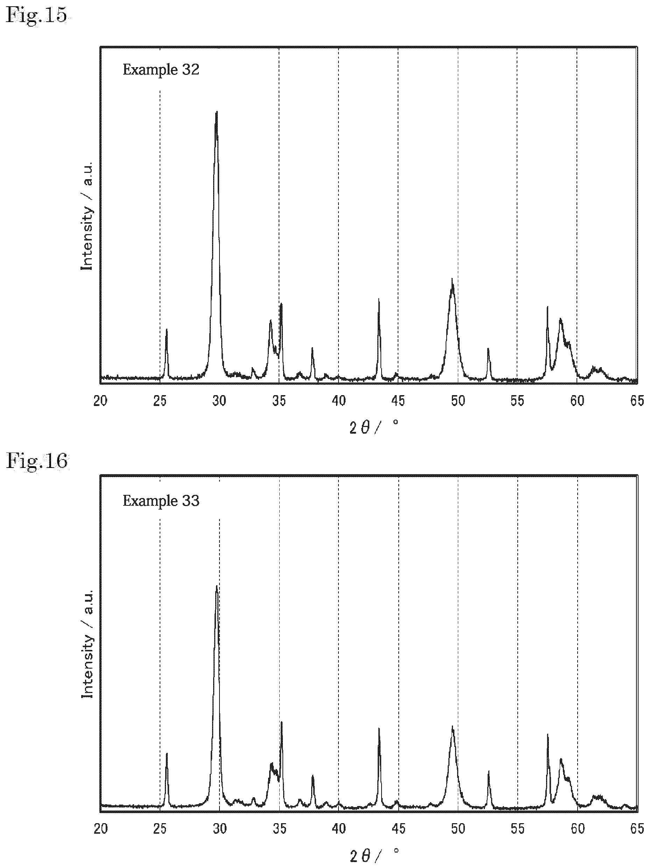

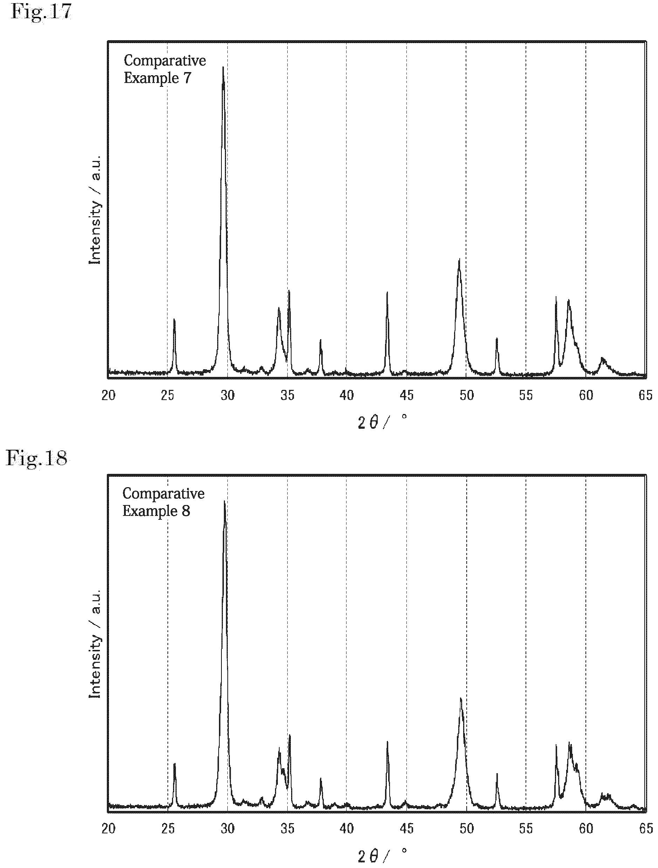

The X-ray diffraction spectra of the zirconia-containing alumina-based composite oxides after heating in Example 1, Example 2, Comparative Example 1, Example 3, Comparative Example 2, Example 4, Comparative Example 3, Example 7, Comparative Example 4, Example 13, Comparative Example 5, Example 22, Comparative Example 6, Example 31, Example 32, Example 33, Comparative Example 7, and Comparative Example 8 are shown in Figs. 1 to 18, respectively.

[Measurement of particle diameter $D_{50}$]

In a 50-ml beaker were placed 0.15 g of the zirconia-containing alumina-based composite oxide of each of Examples and Comparative Examples and 40 ml of a 0.2% aqueous sodium hexametaphosphate solution, and the mixture was dispersed with an ultrasonic cleaner "VS-100 III" (VELVO-CLEAR Co.) for 5 minutes. Then, the resulting dispersion was placed in a device (a laser diffraction/scattering particle size distribution analyzer ("LA-950" manufactured by HORIBA, Ltd.)), and measured. The results are shown in Tables 1 to 5.

[Measurement of specific surface area before heating]

The specific surface area of the zirconia-containing alumina-based composite oxide of each of Examples and Comparative Examples was measured by the BET method using a specific surface area meter ("Macsorb" manufactured by MOUNTECH Co., Ltd.). The results are shown in Tables 1 to 5.

[Measurement of specific surface area after heating under atmospheric pressure at 1200°C for 12 hours]

The zirconia-containing alumina-based composite oxide of each of Examples and Comparative Examples were each heated under the atmospheric pressure (0.1013 MPa, in the air atmosphere) at 1200°C for 12 hours. The specific surface area of each of the zirconia-containing alumina-based composite oxides after heating was measured by the BET method using a specific surface area meter ("Macsorb" manufactured by MOUNTECH Co., Ltd.). The results are shown in Tables 1 to 5.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Composition | $ZrO_2$ (wt%) | 2.0 | 2.0 | 4.0 | 8.0 | 15.0 | 15.0 | 20.0 | 30.0 | 50.0 |
| | $CeO_2$ (wt%) | | | 4.0 | 8.0 | 10.0 | 10.0 | 10.0 | 20.0 | 10.0 |
| | $La_2O_3$ (wt%) | 2.0 | 2.0 | 2.0 | 2.0 | 2.0 | 2.0 | 2.0 | 2.0 | 4.0 |
| | $Nd_2O_3$ (wt%) | | | | 2.0 | | 2.0 | 2.0 | 2.0 | 2.0 |
| | $Pr_6O_{11}$ (wt%) | | | | | 2.0 | | 2.0 | | |
| | $Y_2O_3$ (wt%) | | | | 2.0 | 2.0 | 2.0 | | 2.0 | 4.0 |
| | $Al_2O_3$ (wt%) | 96.0 | 96.0 | 90.0 | 78.0 | 69.0 | 69.0 | 64.0 | 44.0 | 30.0 |
| | Others (wt%) | | | | | | | | | |
| Specific surface area before heating ($m^2/g$) | | 128.2 | 130.1 | 120.0 | 121.6 | 106.8 | 111.2 | 96.4 | 75.1 | 42.5 |
| Specific surface area after heating ($m^2/g$) | | 24.8 | 25.2 | 16.3 | 20.6 | 14.4 | 15.2 | 9.7 | 11.2 | 7.2 |
| R | | 0.54 | 0.57 | 0.26 | 0.43 | 0.43 | 0.47 | 0.31 | 0.51 | 1.35 |
| Tr | | 3.88 | 3.58 | 7.73 | 7.60 | 5.39 | 5.22 | 3.35 | 3.02 | 2.18 |
| $\theta\text{-}Al_2O_3$ peak intensity (CPS) | | 1737 | 1637 | 727 | 660 | 520 | 513 | 373 | 277 | 320 |
| $\alpha\text{-}Al_2O_3$ peak intensity (CPS) | | 3193 | 2893 | 2827 | 1537 | 1200 | 1087 | 1187 | 543 | 237 |
| $ZrO_2$ peak intensity (CPS) | | 777 | 717 | 3093 | 6080 | 8080 | 7823 | 6703 | 9073 | 10913 |
| Particle diameter $D_{50}$ ($\mu m$) | | 195 | 205 | 230 | 139 | 90 | 72 | 63 | 35 | 40 |

[Table 2]

| | | | Example 10 | Example 11 | Example 12 | Example 13 | Example 14 | Example 15 | Example 16 | Example 17 | Example 18 |
|---|---|---|---|---|---|---|---|---|---|---|---|
| Composition | $ZrO_2$ | wt% | 60.0 | 70.0 | 50.0 | 20.0 | 20.0 | 20.0 | 20.0 | 30.0 | 30.0 |
| | $CeO_2$ | wt% | 10.0 | | | 30.0 | 40.0 | 10.0 | 10.0 | 10.0 | 10.0 |
| | $La_2O_3$ | wt% | 4.0 | 4.0 | 4.0 | 2.0 | 2.0 | 4.0 | 10.0 | 2.0 | 2.0 |
| | $Nd_2O_3$ | wt% | 2.0 | 2.0 | | 2.0 | 2.0 | 4.0 | 10.0 | 2.0 | 2.0 |
| | $Pr_6O_{11}$ | wt% | | | | | | 4.0 | 10.0 | | |
| | $Y_2O_3$ | wt% | 4.0 | 4.0 | 4.0 | 2.0 | 2.0 | 4.0 | 10.0 | 2.0 | 2.0 |
| | $Al_2O_3$ | wt% | 20.0 | 20.0 | 42.0 | 44.0 | 34.0 | 54.0 | 30.0 | 50.0 | 50.0 |
| | Others | wt% | | | | | | | | (MgO)4.0 | (CaO)4.0 |
| Specific surface area before heating | | $m^2/g$ | 27.7 | 21.5 | 63.5 | 84.2 | 70.1 | 94.4 | 31.7 | 83.7 | 72.9 |
| Specific surface area after heating | | $m^2/g$ | 4.4 | 8.9 | 3.5 | 15.3 | 16.0 | 15.2 | 15.2 | 3.2 | 4.8 |
| R | | | 1.55 | 1.80 | 0.71 | 0.95 | 2.29 | 2.41 | 1.49 | 1.00 | 1.30 |
| Tr | | | 1.87 | 2.08 | 2.96 | 3.29 | 3.94 | 3.20 | 2.42 | 2.57 | 3.67 |
| $\theta$-$Al_2O_3$ peak intensity | | CPS | 227 | 270 | 347 | 280 | 290 | 530 | 183 | 327 | 603 |
| $\alpha$-$Al_2O_3$ peak intensity | | CPS | 147 | 150 | 487 | 293 | 127 | 220 | 123 | 327 | 463 |
| $ZrO_2$ peak intensity | | CPS | 11217 | 14593 | 14783 | 6580 | 7873 | 6407 | 4830 | 7723 | 11003 |
| Particle diameter $D_{50}$ | | $\mu m$ | 4.4 | 6.5 | 11 | 7.2 | 4.8 | 22 | 43 | 32 | 25 |

[Table 3]

| | | | Example 19 | Example 20 | Example 21 | Example 22 | Example 23 | Example 24 | Example 25 | Example 26 | Example 27 |
|---|---|---|---|---|---|---|---|---|---|---|---|
| Composition | $ZrO_2$ | wt% | 30.0 | 30.0 | 30.0 | 40.0 | 44.0 | 43.5 | 43.5 | 43.5 | 3.7 |
| | $CeO_2$ | wt% | 10.0 | 10.0 | 10.0 | 20.0 | 20.0 | 20.0 | 20.0 | 20.0 | 3.7 |
| | $La_2O_3$ | wt% | 2.0 | 2.0 | 2.0 | 4.0 | 2.0 | 2.0 | 2.0 | 2.0 | 2.0 |
| | $Nd_2O_3$ | wt% | 2.0 | 2.0 | 2.0 | 2.0 | 2.0 | 2.0 | 2.0 | 2.0 | |
| | $Pr_6O_{11}$ | wt% | | | | | | | | | |
| | $Y_2O_3$ | wt% | 2.0 | 2.0 | 2.0 | 4.0 | 2.0 | 2.0 | 2.0 | 2.0 | |
| | $Al_2O_3$ | wt% | 50.0 | 50.0 | 50.0 | 30.0 | 30.0 | 29.5 | 29.5 | 29.5 | 89.6 |
| | Others | wt% | (SrO)4.0 | (BaO)4.0 | $(PO_4)$4.0 | | - | $(Fe_2O_3)$1.0 | (Pt)1.0 | (Rh)1.0 | (SrO)1.0 |
| Specific surface area before heating | | $m^2/g$ | 79.9 | 88.6 | 81.3 | 54.8 | 67.4 | 64.5 | 67.1 | 68.2 | 116.5 |
| Specific surface area after heating | | $m^2/g$ | 6.0 | 7.7 | 9.3 | 8.8 | 6.5 | 3.6 | 6.1 | 7.1 | 14.1 |
| R | | | 1.11 | 1.45 | 0.61 | 0.94 | 0.81 | 0.31 | 0.80 | 1.19 | 0.29 |
| Tr | | | 2.43 | 2.38 | 3.26 | 3.11 | 1.93 | 1.78 | 1.92 | 1.87 | 15.44 |
| $\theta$-$Al_2O_3$ peak intensity | | CPS | 597 | 717 | 403 | 260 | 327 | 173 | 317 | 357 | 500 |
| $\alpha$-$Al_2O_3$ peak intensity | | CPS | 537 | 493 | 663 | 277 | 403 | 567 | 397 | 300 | 1720 |
| $ZrO_2$ peak intensity | | CPS | 7283 | 7153 | 9770 | 12437 | 8510 | 7760 | 8353 | 8127 | 5713 |
| Particle diameter $D_{50}$ | | $\mu$m | 38 | 44 | 62 | 8.2 | 9.8 | 12 | 22 | 20 | 92 |

[Table 4]

| | | | Example 28 | Example 29 | Example 30 | Example 31 | Example 32 | Example 33 |
|---|---|---|---|---|---|---|---|---|
| Composition | $ZrO_2$ | wt% | 3.7 | 3.7 | 3.7 | 26.0 | 26.0 | 26.0 |
| | $CeO_2$ | wt% | 3.7 | 3.7 | 3.7 | 10.0 | 10.0 | 10.0 |
| | $La_2O_3$ | wt% | 2.0 | 2.0 | 2.0 | 2.0 | 2.0 | 2.0 |
| | $Nd_2O_3$ | wt% | | | | | | |
| | $Pr_6O_{11}$ | wt% | | | | | | |
| | $Y_2O_3$ | wt% | | | | 2.0 | 2.0 | 2.0 |
| | $Al_2O_3$ | wt% | 89.6 | 89.6 | 89.6 | 60.0 | 60.0 | 60.0 |
| | Others | wt% | $(PO_4)$1.0 | $(SiO_2)$1.0 | $(TiO_2)$1.0 | | | |
| Specific surface area before heating | | $m^2/g$ | 121.1 | 123.0 | 108.2 | 95.4 | 94.8 | 95.0 |
| Specific surface area after heating | | $m^2/g$ | 17.7 | 20.2 | 12.2 | 8.8 | 8.1 | 7.5 |
| R | | | 0.51 | 0.71 | 0.26 | 0.40 | 0.29 | 0.25 |
| Tr | | | 16.34 | 18.04 | 17.39 | 2.67 | 2.50 | 2.05 |
| $\theta$-$Al_2O_3$ peak intensity | | CPS | 753 | 840 | 577 | 450 | 380 | 350 |
| $\alpha$-$Al_2O_3$ peak intensity | | CPS | 1467 | 1180 | 2217 | 1117 | 1300 | 1387 |
| $ZrO_2$ peak intensity | | CPS | 6047 | 6673 | 6436 | 6933 | 6493 | 5333 |
| Particle diameter $D_{50}$ | | $\mu$m | 85 | 73 | 65 | 70 | 62 | 43 |

[Table 5]

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Composition | $ZrO_2$ | wt% | 2.0 | 4.0 | 8.0 | 20.0 | 20.0 | 40.0 | 26.0 | 26.0 |
| | $CeO_2$ | wt% | | 4.0 | 8.0 | 10.0 | 30.0 | 20.0 | 10.0 | 10.0 |
| | $La_2O_3$ | wt% | 2.0 | 2.0 | 2.0 | 2.0 | 2.0 | 4.0 | 2.0 | 2.0 |
| | $Nd_2O_3$ | wt% | | | | 2.0 | 2.0 | 2.0 | 2.0 | |
| | $Pr_6O_{11}$ | wt% | | | | | 2.0 | | | |
| | $Y_2O_3$ | wt% | | | 2.0 | | 2.0 | 4.0 | 2.0 | 2.0 |
| | $Al_2O_3$ | wt% | 96.0 | 90.0 | 78.0 | 64.0 | 44.0 | 30.0 | 60.0 | 60.0 |
| | Others | wt% | | | | | | | | |
| Specific surface area before heating | | $m^2/g$ | 96.6 | 92.6 | 81.4 | 68.9 | 48.6 | 34.4 | 96.1 | 95.5 |
| Specific surface area after heating | | $m^2/g$ | 13.0 | 9.1 | 8.0 | 7.3 | 9.1 | 6.7 | 6.9 | 7.0 |
| R | | | 0.23 | 0.09 | 0.12 | 0.15 | 0.21 | 0.23 | 0.20 | 0.23 |
| Tr | | | 4.05 | 5.21 | 7.08 | 3.30 | 3.92 | 2.94 | 2.71 | 1.55 |
| $\theta$-$Al_2O_3$ peak intensity | | CPS | 1060 | 333 | 263 | 217 | 140 | 133 | 280 | 333 |
| $\alpha$-$Al_2O_3$ peak intensity | | CPS | 4533 | 3877 | 2210 | 1407 | 663 | 580 | 1407 | 1467 |
| $ZrO_2$ peak intensity | | CPS | 810 | 2083 | 5663 | 6593 | 7833 | 11760 | 7040 | 4030 |
| Particle diameter $D_{50}$ | | $\mu m$ | 146 | 102 | 205 | 65 | 35 | 22 | 105 | 12 |

EP 4 606 771 A1

33

**Claims**

1. A zirconia-containing alumina-based composite oxide comprising zirconia and alumina,
   wherein in an XRD profile A after 12-hour heating under atmospheric pressure at 1200°C, when a peak intensity derived from a $\theta$-$Al_2O_3$ phase around $2\theta = 33°$ is X, a peak intensity derived from an $\alpha$-$Al_2O_3$ phase around $2\theta = 26°$ is Y, and [X/Y] is R, R satisfies the following Formula [1]:

$$\text{Formula [1]: } 0.25 < R < 5.0.$$

2. The zirconia-containing alumina-based composite oxide according to claim 1, wherein when a peak intensity derived from $ZrO_2$ around $2\theta = 30°$ in the XRD profile A is Z, a mass ratio of an oxide component of $ZrO_2$ to the entire zirconia-containing alumina-based composite oxide is W, and [Z/W] is Tr, Tr satisfies the following Formula [2]:

$$\text{Formula [2]: } 1.70 < Tr < 25.0.$$

3. The zirconia-containing alumina-based composite oxide according to claim 2, wherein the R satisfies the following Formula [3]:

$$\text{Formula [3]: } 0.35 < R < 3.5.$$

4. The zirconia-containing alumina-based composite oxide according to claim 3, wherein the Tr satisfies the following Formula [4]:

$$\text{Formula [4]: } 1.72 < Tr < 20.0.$$

5. The zirconia-containing alumina-based composite oxide according to claim 4, wherein a content of alumina is 15% by mass or more and 97% by mass or less.

6. The zirconia-containing alumina-based composite oxide according to claim 5, wherein a content of zirconia is 0.1% by mass or more and 75% by mass or less.

7. The zirconia-containing alumina-based composite oxide according to claim 6, comprising an oxide of a rare earth element other than Pm.

8. A method for producing a zirconia-containing alumina-based composite oxide, comprising:

   step 1 of obtaining solution A in which a basic zirconium salt is added to an aqueous solution of a soluble carbonate and/or a soluble hydrogen carbonate;
   step 2 of obtaining solution B containing a raw material salt containing aluminum and a raw material salt containing zirconium;
   step 3 of obtaining a precipitate of a zirconium-containing aluminum-based composite hydroxide by mixing the solution A and the solution B; and
   step 4 of obtaining a zirconia-containing alumina-based composite oxide by heat-treating the precipitate, wherein
   an amount of the basic zirconium salt to be added in the step 1 is an amount such that an amount of zirconia accounting for in a zirconia-containing alumina-based composite oxide to be obtained is 1 to 95% by mass,
   an amount of the raw material salt containing zirconium to be added in the step 2 is an amount such that an amount of zirconia accounting for in the zirconia-containing alumina-based composite oxide to be obtained is 5 to 99% by mass, and
   a total of zirconia contained in the basic zirconium salt to be added in the step 1 and zirconia contained in the raw material salt containing zirconium to be added in the step 2 is an amount such that the total is 100% by mass of zirconia accounting for in the zirconia-containing alumina-based composite oxide to be obtained.

Fig.1

Example 1

Fig.2

Example 2

Fig.3

Fig.4

Fig.5

Comparative Example 2

Fig.6

Example 4

Fig.7

Fig.8

Fig.9

Fig.10

Fig.11

Comparative Example 5

Intensity / a.u.

$2\theta$ / °

Fig.12

Example 22

Intensity / a.u.

$2\theta$ / °

Fig.13

Fig.14

Fig.15

Example 32

Fig.16

Example 33

Fig.17

Comparative
Example 7

Intensity / a.u.

20    25    30    35    40    45    50    55    60    65

$2\theta$ / °

Fig.18

Comparative
Example 8

Intensity / a.u.

20    25    30    35    40    45    50    55    60    65

$2\theta$ / °

## INTERNATIONAL SEARCH REPORT

| International application No. |
| --- |
| **PCT/JP2024/006523** |

### A. CLASSIFICATION OF SUBJECT MATTER

*C01G 25/02*(2006.01)i
FI:  C01G25/02

According to International Patent Classification (IPC) or to both national classification and IPC

### B. FIELDS SEARCHED

Minimum documentation searched (classification system followed by classification symbols)

C01G25/00; B01J21/00-38/74

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2018-150640 A (ITM CO., LTD.) 27 September 2018 (2018-09-27) claims, paragraphs [0028], [0035], examples 1-2, 4, fig. 1 | 1-7 |
| A | | 8 |
| X | CN 114773036 A (TIANJIN UNIVERSITY) 22 July 2022 (2022-07-22) paragraph [0028], comparative example 2, fig. 2 | 1-6 |
| A | | 7-8 |
| A | WO 2019/003424 A1 (DAIICHI KIGENSO KAGAKU KOGYO CO., LTD.) 03 January 2019 (2019-01-03) entire text | 1-8 |
| A | JP 2017-132663 A (DAIICHI KIGENSO KAGAKU KOGYO CO., LTD.) 03 August 2017 (2017-08-03) entire text | 1-8 |

☑ Further documents are listed in the continuation of Box C.     ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **01 May 2024** | **14 May 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

EP 4 606 771 A1

## INTERNATIONAL SEARCH REPORT

International application No.

**PCT/JP2024/006523**

### C. DOCUMENTS CONSIDERED TO BE RELEVANT

| Category* | Citation of document, with indication, where appropriate, of the relevant passages | Relevant to claim No. |
|---|---|---|
| A | JP 60-131860 A (KUREHA CHEMICAL IND CO., LTD.) 13 July 1985 (1985-07-13)<br>entire text | 1-8 |
| A | JP 61-006126 A (KUREHA CHEMICAL IND CO., LTD.) 11 January 1986 (1986-01-11)<br>entire text | 1-8 |
| A | JP 2015-521538 A (BASF CORP.) 30 July 2015 (2015-07-30)<br>entire text | 1-8 |
| A | JP 01-301520 A (SHOWA DENKO K.K.) 05 December 1989 (1989-12-05)<br>entire text | 1-8 |
| A | JP 2014-500217 A (RHODIA OPERATIONS) 09 January 2014 (2014-01-09)<br>entire text | 1-8 |
| A | CN 115159963 A (WUHAN UNIVERSITY OF TECHNOLOGY) 11 October 2022 (2022-10-11)<br>entire text | 1-8 |
| A | NAGA, S. M. et al. Investigation the impact of ZTA addition on the properties of nano biogenic hydroxyapatite. Journal of Materials Science: Materials in Medicine. 2018, 29,55, 1-10<br>entire text | 1-8 |
| A | NAYEBZADEH, Hamed et al. Application of microwave irradiation for fabrication of sulfated ZrO2-Al2O3 nanocomposite via combustion method for esterification reaction: process condition evaluation. Journal of Nanostructure in Chemistry. 2019, 9, 141-152<br>entire text | 1-8 |

Form PCT/ISA/210 (second sheet) (July 2022)

## INTERNATIONAL SEARCH REPORT
### Information on patent family members

International application No.

**PCT/JP2024/006523**

| Patent document cited in search report | | | Publication date (day/month/year) | Patent family member(s) | | Publication date (day/month/year) |
|---|---|---|---|---|---|---|
| JP | 2018-150640 | A | 27 September 2018 | (Family: none) | | |
| CN | 114773036 | A | 22 July 2022 | (Family: none) | | |
| WO | 2019/003424 | A1 | 03 January 2019 | US 2020/0399139 A1 entire text US 2022/0024779 A1 entire text EP 3444225 A1 CN 109641758 A | | |
| JP | 2017-132663 | A | 03 August 2017 | (Family: none) | | |
| JP | 60-131860 | A | 13 July 1985 | DE 3445948 A1 | | |
| JP | 61-006126 | A | 11 January 1986 | (Family: none) | | |
| JP | 2015-521538 | A | 30 July 2015 | US 2013/0336864 A1 entire text WO 2013/188664 A1 EP 2861533 A1 CN 104540782 A KR 10-2015-0023708 A | | |
| JP | 01-301520 | A | 05 December 1989 | (Family: none) | | |
| JP | 2014-500217 | A | 09 January 2014 | US 2012/0122671 A1 entire text WO 2012/067655 A1 EP 2640511 A1 CN 103260747 A KR 10-2013-0111584 A | | |
| CN | 115159963 | A | 11 October 2022 | (Family: none) | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013184125 A
- JP 2014000552 A
- JP 2016209858 A
- JP 2017132663 A
- JP 2020514217 A